Europäisches Patentamt

European Patent Office

Office européen des brevets

(19)

(11) **EP 1 443 691 A1**

(12) **EUROPEAN PATENT APPLICATION**
published in accordance with Art. 158(3) EPC

(43) Date of publication:
**04.08.2004 Bulletin 2004/32**

(51) Int Cl.⁷: **H04B 13/00**, H04L 12/56,
G01L 5/00, G08C 17/00

(21) Application number: **02801507.1**

(22) Date of filing: **09.10.2002**

(86) International application number:
**PCT/JP2002/010459**

(87) International publication number:
**WO 2003/034625 (24.04.2003 Gazette 2003/17)**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **12.10.2001 JP 2001315995
02.05.2002 JP 2002131040**

(71) Applicant: **CELLCROSS CORPORATION
Tokyo 102-0085 (JP)**

(72) Inventors:
• **SHINODA, Hiroyuki,
303, My Castle Mizonokuchi Vil.
Kawasaki-shi, Kanagawa 213-0013 (JP)**
• **HAKOZAKI, Mitsuhiro
Tachikawa-shi, Tokyo 190-0013 (JP)**
• **WANG, Xinyu
Hachioji-shi, Tokyo 192-0916 (JP)**
• **ASAMURA, Naoya
Tokyo 176-0002 (JP)**

(74) Representative:
**Reinhard - Skuhra - Weise & Partner GbR
Friedrichstrasse 31
80801 München (DE)**

(54) **COMMUNICATION APPARATUS&comma; COMMUNICATION DEVICE&comma; SUBSTRATE MOUNTING METHOD&comma; AND TOUCH SENSOR**

(57) A communication apparatus (100) includes a plurality of distributed communication elements (200). Each communication element (200) functions to communicate only with other neighboring communication elements. The coverage is so set as to allow local communications with other neighboring communication elements. The local communications allow a signal to be successively communicated between the communication elements, thereby conveying the signal to the communication element at the destination. The plurality of communication elements are divided into ranks according to their management functions. Route data can be set in each rank, thereby allowing a signal to be efficiently conveyed to the final destination.

FIG.17

EP 1 443 691 A1

## EP 1 443 691 A1

**Description**

### TECHNICAL FIELD

The present invention relates to a communication apparatus for conveying signals and to a communication device for realizing communications of signals, and more particularly to a communication technology for communicating signals using a plurality of communication devices.

### RELATED ART

Communication networks such as LANs (Local Area Networks) or WANs (Wide Area Networks) include a plurality of communication terminals that are linked thereto using coaxial cables, optical fibers or the like. These communication terminals address the desired communication terminal in the network for communications of signals. With the conventional circuit board implementation/fabrication technology, conductive wires of aluminum or copper are patterned on a circuit board, thereby allowing circuit elements such as LSI or memories to be electrically connected.

As such, the field such as the conventional communication network and circuit board implementation technologies is predicated on the conductive wires formed to connect between circuit elements, thereby realizing the exchange of signals via these conductive wires.

However, it is extremely difficult to connect all the existing elements via their individual conductive wires, especially in the presence of an enormous number of elements. For example, a LAN having a plurality of terminals connected therein via cables may include only a limited number of connectable terminals due to a restricted number of ports into which cables can plug or a restricted number of IP addresses that can be set. On the other hand, for the circuit board implementation technology, the more the number of elements, the greater the number of conductive wires becomes. This requires a very complicated circuit design using finer wires due to a limited board area, and as a result, the number of mountable elements will be limited.

Furthermore, the communication network or the circuit board has the terminals or the elements linked or connected physically via individual cables or conductive wires. This would cause signals not to be conveyed in a case of a break in the cable or the wire, possibly leading to a failure in the communications capability.

### DISCLOSURE OF THE INVENTION

The present invention was developed to overcome the problems with the conventional communication technology. It is therefore an object of the present invention to provide a novel communication technology related to the communication apparatus and the communication device. It is another object of the present invention to provide a circuit board implementation/fabrication technology and a sensor technology to which the novel communication technology is applied.

To overcome the aforementioned problems, an aspect of the present invention provides a communication apparatus having a plurality of communication elements that are electrically connected to an electrically conductive layer or an electromagnetic action transfer layer. The communication apparatus is characterized in that each of the communication elements has a communications capability of conveying a signal via the conductive layer to other neighboring communication elements. Preferably, in this communication apparatus, each communication element has a finite setting of communication service area (coverage), so that a signal is conveyed only to the communication elements within the coverage. Furthermore, it is preferable that the coverage is set according to the communication element density of the communication apparatus or the throughput of signal communications. The electromagnetic action transfer layer means a layer capable of conveying an AC signal, e.g., including a layer which functions as an insulator on a DC basis but as a capacitive impedance on an AC basis.

Another aspect of the present invention provides a communication apparatus having a plurality of distributed communication elements. The communication apparatus is characterized in that each of the communication elements has such a coverage that allows local communications with other neighboring communication elements. The local communications allow sequential transmissions of a signal between the communication elements, thereby conveying the signal to a target communication element. It is preferable that the coverage is set according to the communication element density of the communication apparatus or the throughput of signal communications.

In these aspects, it is preferable that individual conductive wires are not formed between the communication elements. Forming no individual conductive wires makes it possible to avoid the conventional risk of breaks in the wires.

The plurality of communication elements may be classified into the first order to the Nth order ranks in ascending order of communication management capabilities of the elements. Each communication element can be assigned an ID, such that a higher order communication element can identify a lower order communication element which the higher order communication element manages, using the ID. The communication elements of each rank can also function as the first order communication element for conveying a signal to other communication elements that exist within a certain neighboring range therefrom, thereby realizing local communications with the neighboring communication elements in the first order rank. The Mth order communication elements have at least a function of the (M-1)th order communication elements, which is necessary for communications management. The Mth order communication elements can be less densely populated than the (M-1)th order communication elements.

Preferably, the Mth order communication element manages the (M-1)th order communication elements which are populated within a predetermined range therefrom. The predetermined range may be set according to either the distance therefrom or the number of communication elements that relay a signal. The Mth order communication element preferably stores a route to an (M-1)th order communication element that it manages, as a route by way of other (M-1)th order communication elements. Furthermore, the Mth order communication element preferably stores a route to another Mth order communication element that is placed within a predetermined range therefrom, as a route by way of an (M-1)th order communication element.

The Mth order communication element can serve as a communication element of each of the second to the Mth order ranks. When functioning as a communication element of a given rank, the Mth order communication element can manage a communication element, lower in rank by one, which is placed within a range set in the given rank. It is preferable that this range is set in each rank. The (M-1)th order communication element preferably stores at least part of the route to the Mth order communication element that manages it, as a route by way of other (M-1)th order communication elements.

The second order communication element transmits a neighborhood response request. Based on a response returned from the first order communication element that has received the neighborhood response request, the second order communication element may set an ID to the first order communication element that has returned the response. The ID includes numerals, codes, or symbols for identifying a communication element, and conceptually includes a so-called address.

The second order communication element may transmit a neighborhood check request to the first order communication element to which an ID has been set. The first order communication element that has received the neighborhood check request may transmit a neighborhood response request to check for a neighboring first order communication element. The second order communication element may set an ID to the first order communication element that has returned a response. Preferably, the second order communication element repeatedly transmits the neighborhood check request to set IDs to and manage an increased number of first order communication elements and successively determine routes to the first order communication elements that it manages.

Preferably, the third or higher order communication elements serve also as a second order communication element to set an ID to a first order communication element. Preferably, the third or higher order communication elements can serve as a communication element of each of the third to its own ranks, and transmits a relay neighborhood response request as a communication element of each rank to set a communication element lower in rank by one which is managed in each rank. It is preferable that the third or higher order communication elements determine a route to at least one communication element that is under their management.

A data signal packet includes route data in each rank which is utilized to reach the communication element at the final destination. Preferably, the route data in the (M-1)th order rank includes data on a route to an Mth order communication element located halfway on the route from the transmitting source communication element to the communication element at the final destination. The packet includes a receiving element ID for identifying the communication element that is subsequently to receive the packet. Preferably, upon reception of the packet based on the receiving element ID, the communication element sets a receiving element ID of the communication element that is subsequently to receive the packet, and then sends the packet. Preferably, the communication element sets the receiving element ID in accordance with the route data included in the packet. Preferably, upon reception of the packet based on the receiving element ID, each communication element updates the route data and then transmits the packet. Each communication element is assigned an ID. A higher order communication element may be able to refer to an ID included in the packet, thereby determining whether the communication element that is identified by the ID is under its own management. For example, when the packet includes an ID for identifying a destination communication element and the ID indicates that the communication element is under the management of the higher order communication element. In this case, it is preferable that the higher order communication element sets a route to the communication element to transfer the packet.

Another aspect of the present invention provides a communication device for transmitting a signal to other communication elements existing within a coverage. The communication device includes first and second signal layers isolated from each other, and a communication element connected electrically to these layers, in which the coverage is determined in accordance with the resistances of the first and second signal layers and the capacitance between the first and second signal layers, allowing the communication element to transmit a signal by discharging electric charges to the first or second signal layer. This coverage may also be determined in accordance with the resistance and inductance of the first signal layer and/or the second signal layer and the capacitance between these two layers.

Still another aspect of the present invention provides a communication device for transmitting a signal to other communication elements existing within a coverage. The communication device includes first and second signal layers, and a communication element connected electrically to these layers, in which the first signal layer and the second signal layer are brought into conduction in the communication element, thereby transmitting a signal. It is preferable that the first and second signal layers are brought into conduction via an appropriate impedance, where the conduction includes short-circuiting.

The communication device may further include a high resistance layer which has a resistance higher than those of the first and second signal layers and which brings these layers into conduction.

The communication device may further include a high resistance layer which has a resistance higher than that of the first signal layer and which is electrically connected to the first signal layer, and a power supply layer which is electrically connected to the high resistance layer and which supplies power to the communication element. The aforementioned coverage is determined in accordance with the resistance of the first signal layer. The coverage may also be determined in accordance with the resistance of the high resistance layer and the capacitance between the first and second signal layers. The communication element may transmit a signal by short-circuiting the first and second signal layers.

The second signal layer may also be a ground layer that is connected to the ground. To supply power to a communication element, the capacitor of the communication element may be charged while no signal is being transmitted. Preferably, the first and second signal layers are formed of an electrically conductive flexible body or a meshed object. The communication device can be formed of the flexible body or the meshed object and accordingly a communication apparatus capable of expanding or contracting can be formed.

Still another aspect of the present invention provides a method for circuit board implementation/fabrication, comprising distributing a plurality of circuit elements on an electrically conductive circuit board, the circuit elements each of which has a communications capability of conveying a signal within each predetermined coverage, thereby mounting the circuit elements on the board without forming individual conductive wires between the circuit elements. Since no individual conductive wires are formed between circuit elements, it is possible to mount the circuit elements at any positions, allowing the user to freely fabricate custom LSIs.

Still another aspect of the present invention provides a tactile sensor comprising at least one sensor element including a circuit for measuring stress or temperature to convert it into a coded signal, and an electrically conductive flexible structure which conveys an output signal from the sensor element.

A plurality of signal terminals of the sensor element may be connected to an electrically continuous, electrically conductive rubber region of the sensor element. The sensor element may be provided with two electrodes, which electrically contact two electrically conductive rubber sheets of the elastic structure. The electrodes of the sensor element may electrically contact the two or more electrically conductive rubber sheets of the elastic structure by means of pin-shaped projections protruded from the sensor element. The sensor element may be provided on one surface with two or three electrodes, each of which electrically contacts a plurality of electrically conductive rubber regions formed in a single layer of the elastic structure.

Neighborhood stress may be detected in accordance with a variation in capacitance between an LSI chip of the sensor element and an electrode component connected thereto. The electrode component connected to the sensor element can be supported at a small area near its center, thereby allowing the electrode to be deformed with a good sensitivity to an uneven pressure on the surface of the electrode.

The neighborhood stress may also be detected in accordance with a variation in resistance of an LSI chip of the sensor element and a pressure-sensitive electrically conductive rubber sheet connected thereto. The neighborhood stress may also be detected in accordance with a variation in the amount of light arriving at an optical sensor on an LSI chip of the sensor element.

Still another aspect of the present invention provides a communication device for conveying a signal to other communication elements existing within a coverage. The communication device includes first and second signal layers isolated from each other, and a communication element electro-magnetically connected to these layers, in which the coverage is determined in accordance with an attenuation factor of an electromagnetic wave, and the communication element emits an electromagnetic wave or a beam of light to the first signal layer or the second signal layer, thereby transmitting a signal.

The representations of the present invention exchanged between the device, the assembly, the apparatus, the method and the system are also effective as an aspect of the present invention.

**BRIEF DESCRIPTION OF THE DRAWINGS**

These and other objects, features, and advantages will be better understood through the following descriptions in accordance with the preferred embodiments with reference to the accompanying drawings; in which

Fig. 1 is an explanatory view illustrating the schemes of a communication technology;

Fig. 2A is a conceptual view illustrating a relay communication scheme, Fig. 2B is a conceptual view illustrating a direct communication scheme;

Fig. 3 is a view illustrating the outer arrangement of a communication apparatus according to a first embodiment;

Fig. 4 is a functional block diagram of a communication element;

Fig. 5 is an explanatory view illustrating an exemplary structure of a communication device for realizing a local communication;

Fig. 6A is a view illustrating a communication element charging a drive capacitor, Fig. 6B is a view illustrating the communication element allowing the drive capacitor to be discharged;

Fig. 7 is a view showing the relation between the voltage and the coverage of a charge-storage-type communication device;

Fig. 8A is a view illustrating an example of the structure of a current-diffusion-type communication device, Fig. 8B is a view illustrating another example of the structure of a current-diffusion-type communication device, Fig. 8C is a view illustrating still another example of the structure of a current-diffusion-type communication device;

Fig. 9 is an explanatory view illustrating the principle of the signal transmission according to the current-diffusion-type communication device;

Fig. 10 is a view illustrating an arrangement for supplying power to a communication element;

Fig. 11 is an explanatory view illustrating a signal propagating in a theoretical wave propagation mode;

Fig. 12 is an explanatory view illustrating a hierarchical structure of communication elements in an address relay transfer mode;

Fig. 13 is a view illustrating an example of the structure of a transmitted packet;

Fig. 14 is a conceptual view illustrating route data in each rank;

Fig. 15 is an explanatory view illustrating a signal being conveyed from a transmitting source communication element to its parent element in an address relay transfer mode;

Fig. 16 is an explanatory view illustrating a signal being conveyed from a higher rank communication element to a destination communication element in an address relay transfer mode;

Fig. 17 is an explanatory view illustrating a signal being conveyed to a destination communication element in an address relay transfer mode without passing through a higher order managing communication element;

Fig. 18A shows an example of a transferred packet, Fig. 18B shows another example of a transferred packet, Fig. 18C shows still another example of a transferred packet, Fig. 18D shows another example of a transferred packet;

Fig. 19 is a view illustrating the structure of a neighborhood response request packet;

Fig. 20 is a view illustrating the structure of a neighborhood check request packet;

Fig. 21 is a view illustrating the structure of a neighborhood copy request packet;

Fig. 22 is a view illustrating the structure of a check report packet;

Fig. 23 is a view illustrating the structure of a relay acknowledgement packet;

Fig. 24 is a view illustrating the structure of a relay ID change request packet;

Fig. 25 is a view illustrating the structure of a relay neighborhood response request packet;

Fig. 26 is a schematic view illustrating a tactile sensor;

Fig. 27 is a cross-sectional view illustrating a tactile sensor;

Fig. 28A is a view illustrating a voltage that is applied to an electrically conductive rubber sheet by a computer connected to the electrically conductive rubber sheet, Fig. 28B shows the input and output impedance between the electrodes of a tactile chip, Fig. 28C shows the input and output impedance between the electrodes of another tactile chip;

Fig. 29A is an explanatory view illustrating the principle of signal transmission according to the direct communication scheme, Fig. 29B shows an equivalent circuit at a frequency that allows the potential across electrically conductive layers to be considered constant, Fig. 29C shows the fundamental circuit configuration of a tactile element, Fig. 29D shows a circuit for detecting power being turned on;

Fig. 30A is a side view illustrating a tactile chip, Fig. 30B is an exploded view illustrating the tactile chip; Fig. 30C is a view showing the surface of an LSI chip and components attached to the LSI chip;

Fig. 31 is an explanatory view illustrating a transmitting circuit for detecting stress;

Fig. 32 is a cross-sectional view illustrating an implemented tactile element;

Fig. 33 is a schematic view illustrating an arrangement for demonstrating the operation of a tactile sensor;

Fig. 34 is a substitute view for a patterned mask used with a test LSI chip prepared as a prototype;

Fig. 35A is a substitute view for a picture, taken from above, of an externally attached electrodes from which a component has been removed, Fig. 35B is a substitute view for a picture taken of the electrodes to which a component has been connected;

Fig. 36 is a view illustrating a transmitting waveform obtained by observing a test chip;

Fig. 37A is a view showing transmitting frequencies $f_{13}$, $f_{24}$ observed when the entire surface of a structure is continually displaced vertically, Fig. 37B is a view showing transmitting frequencies $f_{13}$, $f_{24}$ observed when the surface is continually displaced horizontally (in the x direction);

Fig. 38A is a plot showing the sum of and the difference between $f_{13}$ and $f_{24}$, observed upon continual application of vertical displacement, with the horizontal axis representing the displacement in the Z direction, Fig. 38B is a plot showing the sum of and the difference between $f_{13}$ and $f_{24}$, observed upon continual application of horizontal displacement (in the x direction), with the horizontal axis representing the displacement in the X direction,

Fig. 39 is an explanatory view illustrating a method in which electrodes are placed flush with each other on a chip, allowing pin-shaped projections to contact two layers of electrically conductive rubber; and

Fig. 40 is an explanatory view illustrating a method in which electrodes are placed flush with each other on a chip, allowing electrically conductive regions patterned inside a single layer to electrically contact the electrodes.

## BEST MODE FOR CARRYING OUT THE INVENTION

[First embodiment]

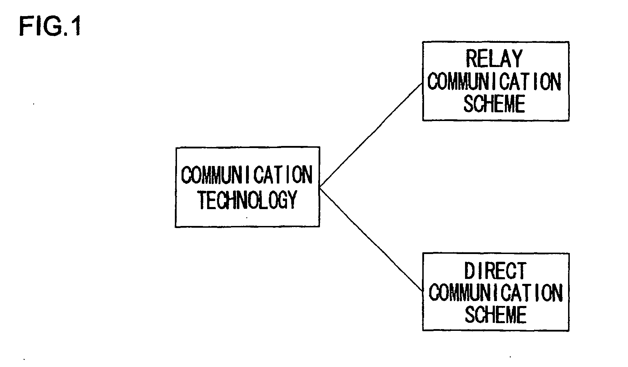

Fig. 1 is an explanatory view illustrating the scheme of a communication technology according to the present invention. The communication technology according to the present invention is largely divided into the relay communication and the direct communication schemes. In either scheme, it is preferable that a plurality of communication elements exist in an environment (space), in which no individual conductive wires are formed to physically connect between these communication elements. For example, these communication elements may be arranged to connect to a flat electrically conductive layer, an electrically conductive circuit board, or an electromagnetic action transfer layer capable of conveying an AC signal. The elements may also be configured to transmit and receive a signal wirelessly. Signals may be transmitted through the discharge of electric charges in the electrically conductive layer or through the emission of light or electromagnetic waves. The communication element is not limited to one formed in the shape of a chip but may conceptually includes ones having communications capabilities to be described in accordance with the embodiments of the present invention, in whatever shape and form. The relay communication technology is a scheme for locally conveying a signal successively between neighboring communication elements along a path, thereby allowing the signal to reach a communication element at its final destination, whereas the direct communication technology is a scheme for conveying a signal directly to a communication element at its final destination.

It is preferable that each communication element is set to have a relatively short range over which a signal can reach (hereinafter also referred to as the "coverage"). An increase in signal coverage would increase power consumption by that amount and possibly have an adverse effect on other communication elements which do not participate in the communication at that time. Accordingly, since it is sufficient that a communication element can convey a signal to its neighboring one in the relay communication scheme, it is preferable that the coverage is determined according to an average distance to its neighboring communication elements. Even in the direct communication scheme, it is not preferable to set the coverage, that is, a distance which a signal can be reached, to an unnecessarily longer distance than the maximum distance between the communication elements within an environment. Therefore, it is preferable that the coverage is determined according to the distance between communication elements.

The communication technology according to the present invention is applicable to various applications. For example, electronic components (circuit elements) such as LSIs or memories can be provided with the communications capability according to the present invention. This allows for implementing a plurality of electronic components on a circuit board without connecting individual conductive wires to each of the electronic components. Recently, robots with a sense of skin have been intensively studied. Thus, it is now possible to provide a technology that allows a tactile sensor of the robot to have the communications capability according to the present invention and thereby the information detected with the tactile sensor to be transmitted to the brain computer of the robot. A floor in a building can be interspersed with sensors having the communications capability according to the present invention. This makes it possible to monitor the behavior of elderly people who live their own or to help prevent crime when they are away from home. Light-emitting elements can also be provided with the communications capability according to the present invention, thereby allowing for creating a cloth-shaped display device. Furthermore, tags may be provided with the communications capability according to the present invention, thereby making it possible to provide inexpensive tags that allow its information to be read with accuracy. A wireless communication element may be provided with the communications capability according to the present invention, for example, to equip a computer with the wireless communication element, in the vicinity of which located is the wireless communication element of a computer at the other end. This makes it possible to facilitate the transmission and reception of information between the computers. It is also possible to embed a communication element having the communications capability according to the present invention in the electrically conductive inner wall of an automobile. This allows for realizing a communication apparatus that requires no individual burdensome cabling.

This communication technology allows a signal to be conveyed between the communication elements located within relatively short ranges. This allows for reducing attenuation and degradation of the signal over the distances, thus realizing high-speed transmission with high throughput independent of the number of nodes involved. Many communication elements can be distributed within an environment, thereby serving as an information exchange medium with a chip having a predetermined function such as a sensor to realize a wide coverage. Furthermore, the communication element can be placed relatively freely at a given position. This allows for facilitating design to manufacture an artificial skin or a display device or the like, which has a predetermined function. Furthermore, since each chip is provided with the communications capability, no board circuit design including wiring is required and a less number of process steps can be employed to prepare a board circuit. The communication element sandwiched between electrically conductive layers would eliminate electromagnetic noise radiations, and be very useful, especially, in highly public facilities such as hospitals. Furthermore, the communication element has also a self recovery function that allows for resetting a path between chips to establish an alternative communication path even in the event of failure in the electrically conductive layer or the like.

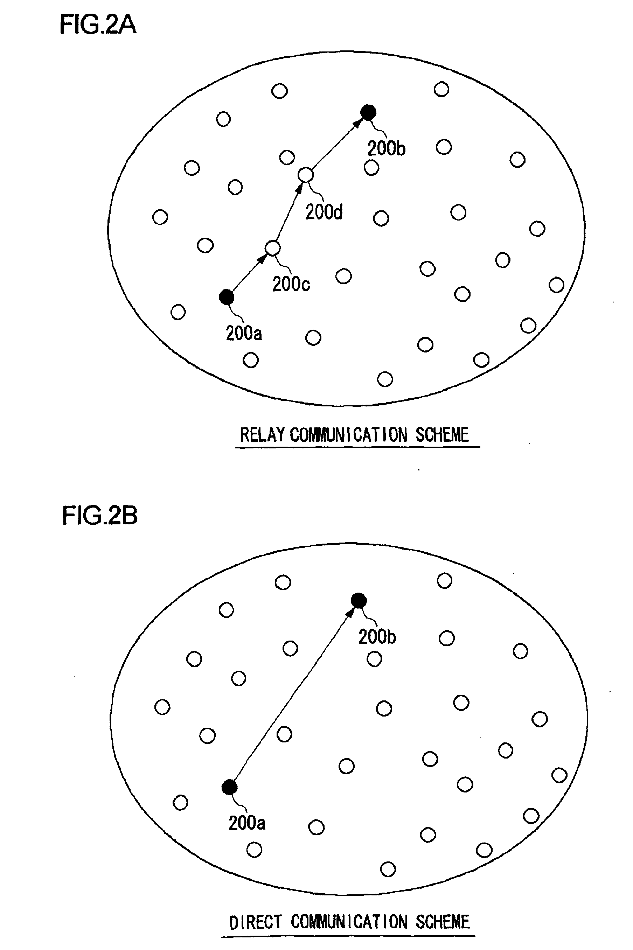

Fig. 2 is an explanatory view illustrating a communication scheme according to the present invention.

Fig. 2A is a conceptual view illustrating a relay communication scheme, showing a plurality of communication elements indicated by small circles and distributed in an environment. Each of the communication elements has a communications capability of conveying a signal to other neighboring communication elements. It is preferable that the communication element has such a coverage being set that allows a local communication with other neighboring communication elements. This local communication allows a signal to be successively communicated between the communication elements, thereby conveying the signal to the communication element at its final destination.

Suppose that a communication element 200a is a signal transmitting source element and a communication element 200b is at the final destination. In this case, the relay communication scheme allows the signal to be conveyed from the communication element 200a to the communication element 200b via communication elements 200c and 200d. The signal may also be conveyed in various manners. For example, the communication element 200a transmits the signal to all the neighboring communication elements within its coverage, so that all the communication elements that have received the signal in turn transmit the signal to their neighboring communication elements, thereby allowing the signal to be concentrically conveyed to the final destination. More preferably, the route between the communication elements 200a and 200b, which is set in advance or real time, may be used to convey the signal only via particular communication elements. In particular, when the latter method is employed, only the communication elements that are required for conveyance of the signal provide transmissions. This makes it possible to reduce power consumption and interference with the transmissions provided by other communication elements. A detailed description will be given later to a method for determining a route and a method for conveying a signal using the relay communication scheme.

Fig. 2B is a conceptual view illustrating the direct communication scheme, showing a signal being conveyed directly from the transmitting source communication element 200a to the destination communication element 200b. The transmitting source communication element 200a may be configured in the same manner as the other communication elements, or may be an externally connected host computer. A method for conveying a signal using the direct communication scheme will also be discussed later.

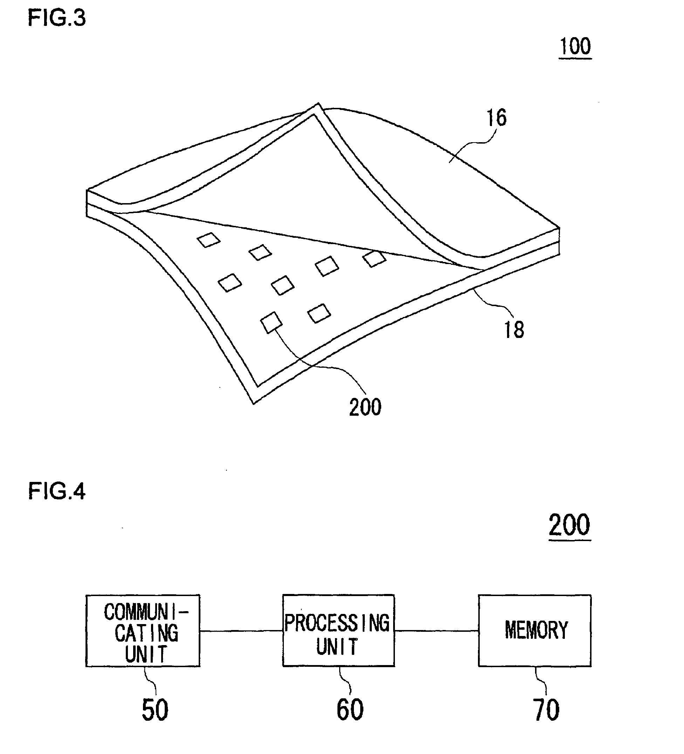

Fig. 3 is a view illustrating the outer arrangement of a communication apparatus 100 according to a first embodiment of the present invention. In the communication apparatus 100, a plurality of communication elements 200 are sandwiched between two electrically conductive layers 16 and 18. Each of the communication elements 200 is electrically connected to the two electrically conductive layers 16 and 18. The electrically conductive layers 16 and 18 may have a single-layer structure or a multi-layer structure. This example employs a two-dimensional blanket structure. Fig. 3 shows the electrically conductive layers 16 and 18. These layers are shown in a state where it is opened to illustrate that the communication elements 200 are sandwiched therebetween.

For example, suppose that the communication apparatus 100 according to the present invention is applied to an artificial skin for covering the surface of a robot. In this case, the electrically conductive layers 16 and 18 are formed of an electrically conductive rubber material. The artificial skin formed of a flexible rubber material can freely extend or contract in response to the action of the robot. Furthermore, a signal is conveyed via the elastic electrically conductive layers 16 and 18 in absence of individual wiring. This allows for reducing the risk of some defects of the communications capability due to a break in the wiring, thereby realizing a stable communications capability. Suppose also that the communication apparatus 100 according to the present invention is used as a circuit board. In this case, the electrically conductive layers 16 and 18 formed of an electrically conductive rubber material can realize a flexible circuit board.

Each of the communication elements 200 can be provided with functions other than the communications capability. Suppose that the communication apparatus 100 is used as the artificial skin of a robot. In this case, some of the communication elements 200 serving as a tactile sensor detect an externally applied stimulus to convey the resulting signal to the communication element at the destination in cooperation with other communication elements. Suppose also that the communication apparatus 100 is applied to a technique for circuit board implementation. In this case, the communication element 200 may also serve as a circuit element such as LSI or memories, for example. As used herein, the term "communication apparatus" refers to an apparatus having at least a communications capability. Thus, those skilled in the art will understand that the communication apparatus may have an additional function such as a sensor function in the form of the artificial skin or a computation function in the form of an electronic circuit.

Fig. 4 is a functional block diagram of the communication element 200. The communication element 200 includes a communicating unit 50, a processing unit 60, and a memory 70. The communicating unit 50 exchanges a signal with other communication elements via the electrically conductive layers 16 and 18 (see Fig. 3). The processing unit 60 controls the communications capability of the communication element 200. More specifically, for example, the processing unit 60 monitors ambient signals, analyzes received signals, generates transmitted signals, and determines the transmission timing of signals, which relate to signal exchange with other communication elements 200. The processing unit 60 may also realize the sensor function, the computation function or the like other than the communications capability. The memory 70 pre-stores information necessary to realize the communications capability or other functions, and successively stores the information as required.

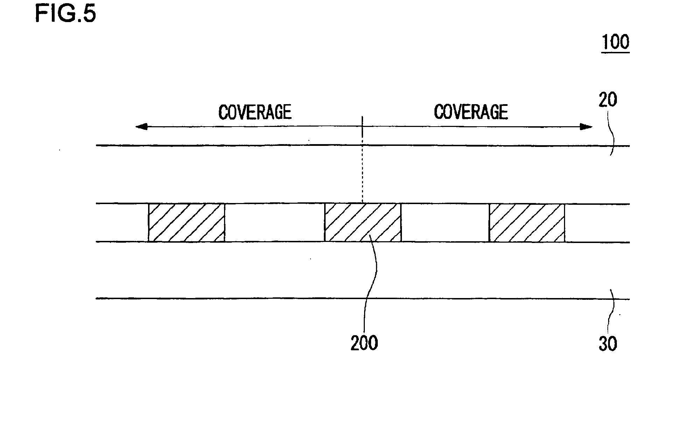

Fig. 5 is an explanatory view illustrating an example of the structure of a communication device for realizing a local communication, showing a cross-sectional view of the communication apparatus 100. As used herein, the term "communication device" refers to the structure for realizing a localized communications capability.

In this example, the communication device includes a first signal layer 20, a second signal layer 30, and a communication element 200 that is electrically connected to these layers. The first signal layer 20 and the second signal layer 30 are insulated from each other, and the second signal layer 30 may be a well conductive ground layer connected to the electrical ground. The communication device has a coverage determined by the resistances of the first and second signal layers 20 and 30 and the capacitance between the first and second signal layers 20 and 30, and the communication element discharges electric charges to the first signal layer 20 and the second signal layer 30, thereby transmitting a signal. The discharged electric charges induce voltage changes at the neighboring communication elements placed within the coverage, which are acknowledged as a signal. Since the communication element shown in Fig. 5 behaves in the manner to drive the capacitor formed by the layers 20 and 30, the communication device may be referred to as a "charge-storage-type" communication device. For convenience in description, this nomenclature is given only to distinguish it from a "current-diffusion-type" communication device, discussed later, and not intended to limit the property and structure of the communication device shown in Fig. 5 by means of this nomenclature.

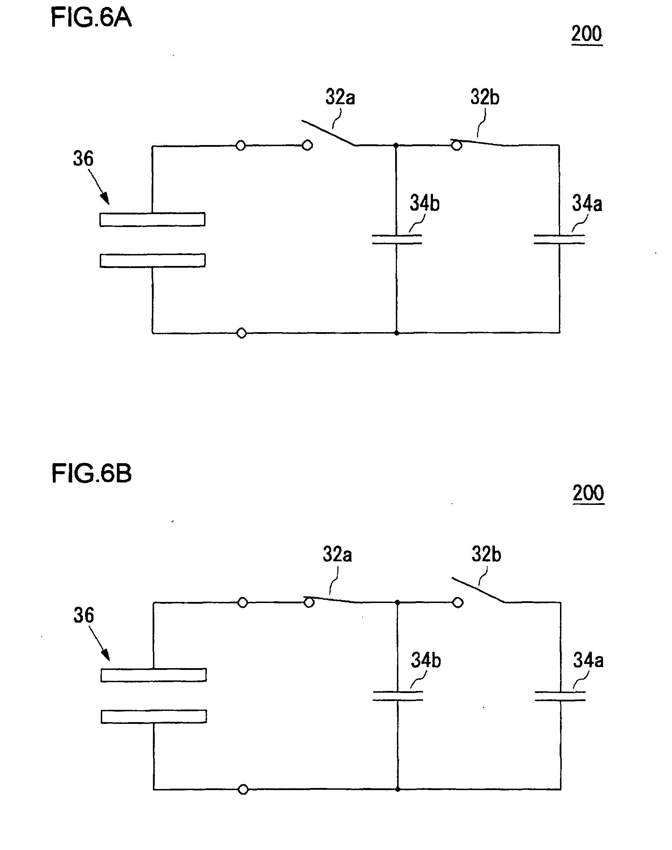

Fig. 6 is an explanatory view illustrating the principle of signal transmission according to the charge-storage-type communication device. Fig. 6A illustrates a communication element 200 recharging a drive capacitor 34b. A main capacitor 34a stores electric charges necessary to drive the entire communication element 200, while the drive capacitor 34b stores electric charges necessary to drive a communication layer 36. The communication layer 36 schematically represents the first signal layer 20 and the second signal layer 30 (see Fig. 5). To charge the drive capacitor 34b, a switch 32a is opened and the switch 32b is closed. Each of the switches 32a and 32b is opened or closed at the predetermined timing by the processing unit 60 (see Fig. 4). This scheme can also drive a current-diffusion-type communication device, discussed later.

Fig. 6B illustrates a communication element 200 allowing the drive capacitor 34b to discharge. When the drive capacitor 34b discharges, the switch 32a is closed and the switch 32b is opened. This communication device discharges the electric charges of the drive capacitor 34b, thereby transmitting a signal. Each time one bit is transmitted, the charge is transferred from the main capacitor 34a to the drive capacitor 34b to discharge the charge of the drive capacitor 34b to the communication layer 36, thereby realizing successive transmissions.

The effective communication distance (coverage) D(m) of a signal at an angular frequency $\omega$ (rad/s) is given by the following equation:

(Equation)

$$D = \sqrt{\frac{1}{\rho C \omega}}$$

where $\rho$ ($\Omega$) is the sheet resistance of the communication layer 36 (the sum of the sheet resistance of the layer 20 and that of the layer 30) and $C(F/m^2)$ is the capacitance between the signal layers per unit area. In this manner, the coverage of a communication device is determined in accordance with the resistance and capacitance of the communication layer 36. Accordingly, if the resistance and capacitance of the communication layer 36 are set appropriately desired coverage can be realized.

Particularly in the relay communication scheme, since it is sufficient that signals can be exchanged only with neighboring communication elements 200, it is preferable that the coverage is set to a value as small as possible. For example, suppose that the communication apparatus 100 has a plurality of communication elements 200 distributed within a distance of 10cm therebetween. In this case, it is preferable that the resistance and capacitance of the communication layer 36 are determined such that the coverage is about 10cm. A coverage having a small value makes it possible to reduce interference with other communication elements 200 and unnecessary power consumption.

The aforementioned principle is described below using an equation. For simplicity in description, assume that this is a one-dimensional problem with voltage $V = V_0 \exp(j\omega t)$ being applied to a small electrode existing at the origin. In this case, the voltage V at position x is expressed by the following equation:

(Equation)

$$V = V_0 \exp\left(-\frac{1+i}{\sqrt{2}} \cdot \frac{|x|}{D}\right) \exp(j\omega t)$$

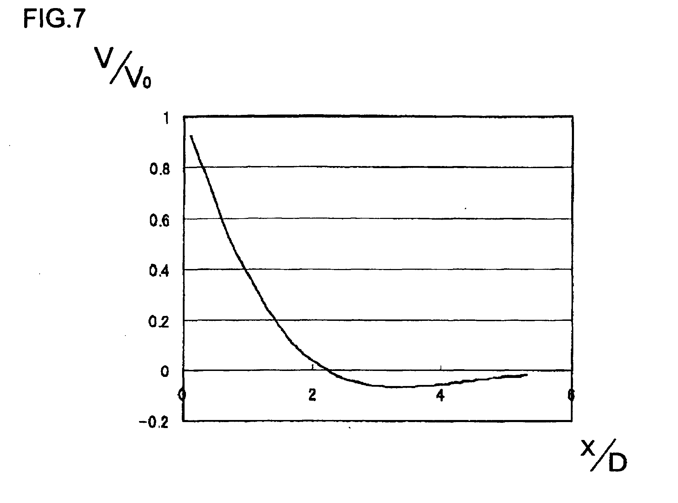

Fig. 7 is a graph showing the relation between the voltage of a charge-storage-type communication device and the coverage, the vertical axis representing the real portion of $V/V_0$ and the horizontal axis representing x/D. It can be seen that the voltage exponentially decreases in amplitude with distance from the origin. Therefore, an effect on a point at a significantly larger distance than the coverage D is negligible. Accordingly, if the coverage D is appropriately determined in accordance with the density of the communication elements 200, an efficient communication can be realized.

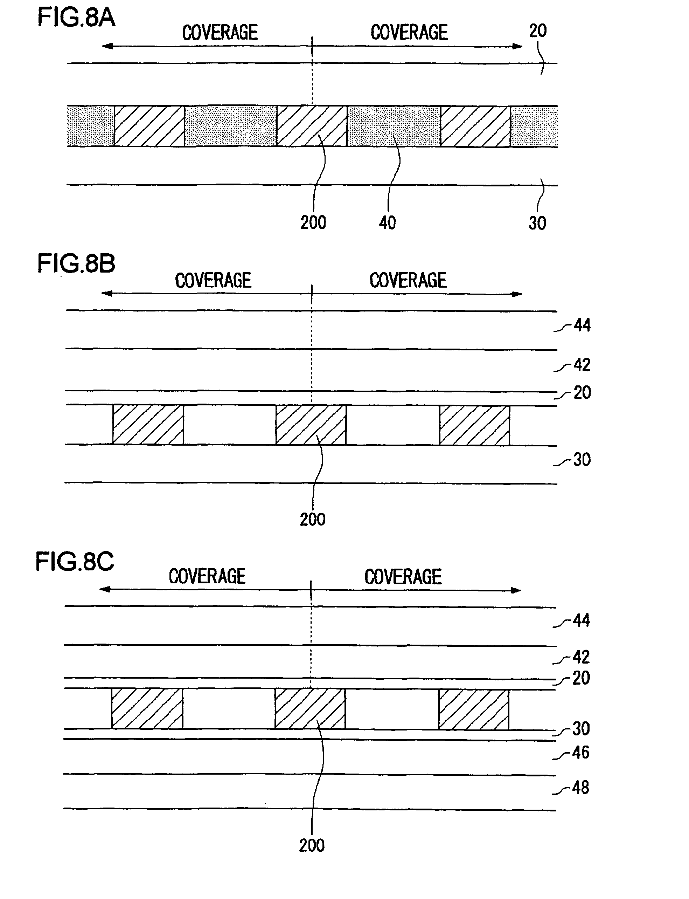

Fig. 8 is an explanatory view illustrating another example of the structure of a communication device for realizing the local communication between neighboring communication elements, showing a cross-sectional view of the communication apparatus 100. This communication device performs a switching operation by which the communication element 200 is brought into a conduction state, causing signal transmission by the resulting voltage drop of the signal layers 20 and 30. Thus, the communication device can be referred to as the "current-diffusion-type" communication device. For convenience in description, this nomenclature is given to distinguish it from the "charge-storage-type" communication device, described above, and not intended to limit the property and structure of the communication device shown in Fig. 8 by means of this nomenclature.

Fig. 8A is a view illustrating an example of the structure of the current-diffusion-type communication device. The communication device includes the first signal layer 20, the second signal layer 30, and a communication element 200 that is electrically connected to these layers. The second signal layer 30 may be a ground layer connected to the electrical ground. The first signal layer 20 and the second signal layer 30 are brought into conduction through a high-resistance layer 40 having a higher resistance than those of these layers. More specifically, the communication element 200 is surrounded by the high-resistance layer 40, with the communication element 200 and the high-resistance layer 40 being sandwiched between the first signal layer 20 and the second signal layer 30. The resistance of the high-resistance layer 40 may be suitably set in consideration of the resistance of the first signal layer 20 and the second signal layer 30 or the communication element 200 may be always conductive with an appropriate resistance inside the element between its two electrodes. In either case, when a switching operation for conduction between the first signal layer 20 and the second signal layer 30 through the communication element 200 is performed, a transmitted signal does not reach a long distance, thus making it possible to set the coverage to a short distance only to neighboring communication elements.

Fig. 8B is a view illustrating another example of the structure of a current-diffusion-type communication device. The communication device includes the first signal layer 20, the second signal layer 30, and a communication element 200 that is electrically connected to these layers. The second signal layer 30 may be a ground layer connected to the electrical ground. The first signal layer 20 and the second signal layer 30 are insulated from each other. The first signal layer 20 is connected with a high-resistance layer 42 having a resistance higher than that of the first signal layer 20, the high-resistance layer 42 being connected with a power supply layer 44 for supplying power to the communication element 200. As illustrated, the high-resistance layer 42 and the power supply layer 44 are successively formed in that order on the first signal layer 20. The first signal layer 20 and the second signal layer 30 being insulated from each other make it possible to prevent a steady current from flowing between the layers. The second signal layer 30 and the power supply layer 44 are formed to have a very low resistance.

The resistance of the first signal layer 20 is set in accordance with the coverage. That is, the resistance of the first signal layer 20 can be appropriately determined in relation to the high-resistance layer 42, thereby allowing the diffusion range of current to be determined. If per unit area, the vertical impedance of the high-resistance layer 42 is greater than impedance Z resulting from the sum of the capacitance between the first signal layer 20 and the second signal layer 30 and the one between the first signal layer 20 and the power supply layer 44, the diffusion range is determined by the resistance of the first signal layer 20 and the impedance Z.

The principle in the foregoing is now described below using an equation. For simplicity, it is assumed that the first signal layer 20 is negligibly thin in thickness. The non-steady component of voltage V(x, y) of the first signal layer 20 satisfies the relation expressed by the following equation:

(Equation)

$$C\frac{\partial}{\partial t}V + \frac{1}{\eta d}V = \left(j\omega C + \frac{1}{\eta d}\right)V = \frac{1}{\rho}\Delta V$$

where $C(F/m^2)$ is the sum of the capacitance between the first signal layer 20 and the power supply layer 44 and the one between the first signal layer 20 and the second signal layer 30, $\eta$ ($\Omega$m) and d(m) are the resistivity and a thickness of the high-resistance layer 42, respectively, $\rho$ ($\Omega$) is the sheet resistance of the first signal layer 20, and $\omega$ (rad/s) is the angular frequency. Therefore, if $\eta d < 1/\omega C$ (the condition for current diffusion), then $1/\eta d$ contributes dominantly, allowing a signal to be conveyed on the current diffusion basis. Assuming that this is a one-dimensional problem with voltage $V = V_0 exp(j\omega t)$ being applied to a small electrode existing at the origin. In this case, the voltage V at position x is expressed by the following equation:

(Equation)

$$V = V_0 exp\left(-\frac{|x|}{D}\right)exp(j\omega t)$$

As can be seen clearly from the equation, no signal phase delay occurs within the range over which the signal reaches. Here, the coverage D is expressed by the following equation:

(Equation)

$$D = \sqrt{\frac{\eta d}{\rho}}$$

The resistance of each component included in this equation, e.g., the resistance of the first signal layer 20, can be determined as appropriate, thereby providing a desired coverage.

Fig. 8C is a view illustrating still another example of the structure of a current-diffusion-type communication device. The communication device includes the first signal layer 20, the second signal layer 30, and a communication element 200 that is electrically connected to these layers. The first signal layer 20 and the second signal layer 30 are insulated from each other. The first signal layer 20 is electrically connected with the high-resistance layer 42 having a resistance higher than that of the first signal layer 20, the high-resistance layer 42 being electrically connected with the power supply layer 44 to supply power to the communication element 200. Likewise, the second signal layer 30 is electrically connected with a high-resistance layer 46 having a resistance higher than that of the second signal layer 30, the high-resistance layer 46 being electrically connected with a power supply layer 48 for supplying power to the communication element 200. As illustrated, the high-resistance layer 42 and the power supply layer 44 are successively stacked in that order on the top of the first signal layer 20, while the high-resistance layer 46 and the power supply layer 48 are successively stacked in that order on the bottom of the second signal layer 30. The communication device shown in Fig. 8B has a staked layer structure only on one surface of the communication element 200; however, as shown in Fig. 8C, a staked layer structure may be formed symmetrically on both the surfaces of the communication element 200. The configuration and property of each layer are as described with reference to Fig. 8B.

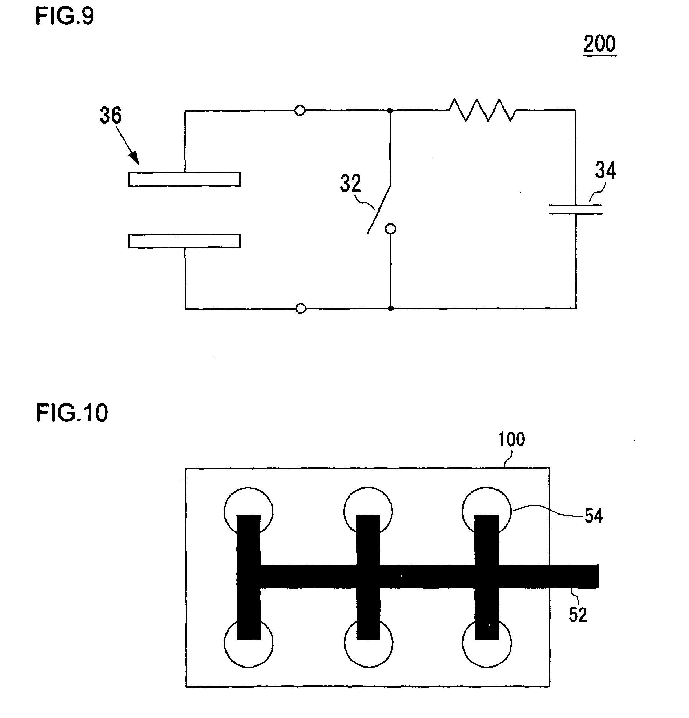

Fig. 9 is an explanatory view illustrating the principle of signal transmission according to the current-diffusion-type communication device. A main capacitor 34 stores electric charges necessary to drive the entire communication element 200. The communication layer 36 schematically represents the first signal layer 20 and the second signal layer 30 (see Fig. 8). This communication element 200 allows a switch 32 to be switched to vary the impedance between electrodes which are connected to the layer 20 and 30, respectively, thereby transmitting a signal. The switch 32 is opened or closed at the predetermined timing by the processing unit 60 (see Fig. 4). This scheme of the communication element can also drive a charge-storage-type communication device.

Closing the switch 32 causes the first signal layer 20 and the second signal layer 30 to be short-circuited. As a result, voltage drops produced between the first signal layer 20 and the second signal layer 30 arise at neighboring communication elements, which thus detect the voltage drops as signals. As described above, in the relay communication scheme, the effect of the voltage drop does not need to be conveyed to distant communication elements but only to neighboring communication elements. Setting the coverage equivalent to the distance between the neighboring communication elements can reduce power consumption and interference with other communication elements as well.

Now, a method for supplying power to the communication element 200 is described below. As an example of the method, a communication device can be formed in a multi-layer structure as shown in Fig. 8B, such that the power supply layer 44 supplies power to the communication element 200. The high-resistance layer 42 being interposed between the communication element 200 and the power supply layer 44 allows electric charges to be supplied to the entire surface of the power supply layer 44 having a low resistance. This makes it possible to stably charge the capacitors of the communication elements 200 distributed throughout the communication apparatus 100.

Fig. 10 is a view illustrating another arrangement for supplying power to a communication element. In this example, the communication apparatus 100 is provided with a power supply line 52 and power supply points 54 to supply power through the power supply line 52 to the communication elements in the communication apparatus 100 via the power supply points 54. In this power supply method, the communication element may be provided with temporally divided cycles, e.g., a signal transmission/reception cycle and a recharging cycle. When a communication element transmits a signal, the impedance across the couple of electrodes of each neighboring communication element is kept high, while upon supplying power, all the elements stop transmitting signals, to simultaneously charge the capacitors of the communication elements. Especially when the communication element does not have a multi-layer structure including a power supply layer but a two-layer structure with a first signal layer and a second signal layer, such a power supply line 52 may be formed.

The specific structures of the communication device has been described above with reference to Figs. 5 through 10; however, the communication device is not limited to the aforementioned structures but may any structure so long as it can exchange a signal with its neighboring communication elements. Now, a detailed explanation will be given below to the relay communication scheme using a communication device for providing local communications.

In this embodiment, the algorithm of the relay communication scheme has a "theoretical wave propagation mode" and an "address relay transfer mode." The theoretical wave propagation mode is a communication algorithm for a transmitting source communication element to broadcast a signal to all communication elements, while the address relay transfer mode is a communication algorithm for defining a route to convey a signal along the route from a transmitting source communication element to a destination communication element. First, the theoretical wave propagation mode is described below.

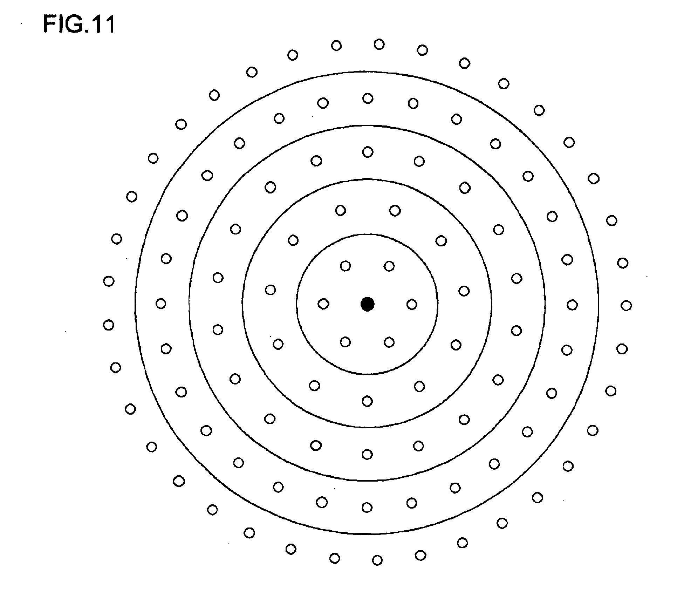

Fig. 11 is an explanatory view illustrating a signal propagating in the theoretical wave propagation mode through a communication apparatus. In the figure, small circles indicate communication elements, the blackened circle at the center indicates a communication element that transmits a signal. The concentric circles surrounding communication elements indicate the areas of the communication elements that receive the signal.

In the theoretical wave propagation mode, all the communication elements monitor ambient signals while waiting for signals. A communication element having received a signal stores the signal in the memory and transmits the same signal trains at a probability of 1/n. The transmission probability of 1/n is pre-set to ensure that the signal propagates throughout the communication apparatus. Each signal train has a "signal ID." When a communication element receives signals having the same signal ID, it is preferable that the signal is not transferred. The aforementioned operations performed by each communication element allow a theoretical wave propagation signal produced at a given communication element to spread substantially concentrically as illustrated throughout the communication apparatus.

Now, the address relay transfer mode is described below.

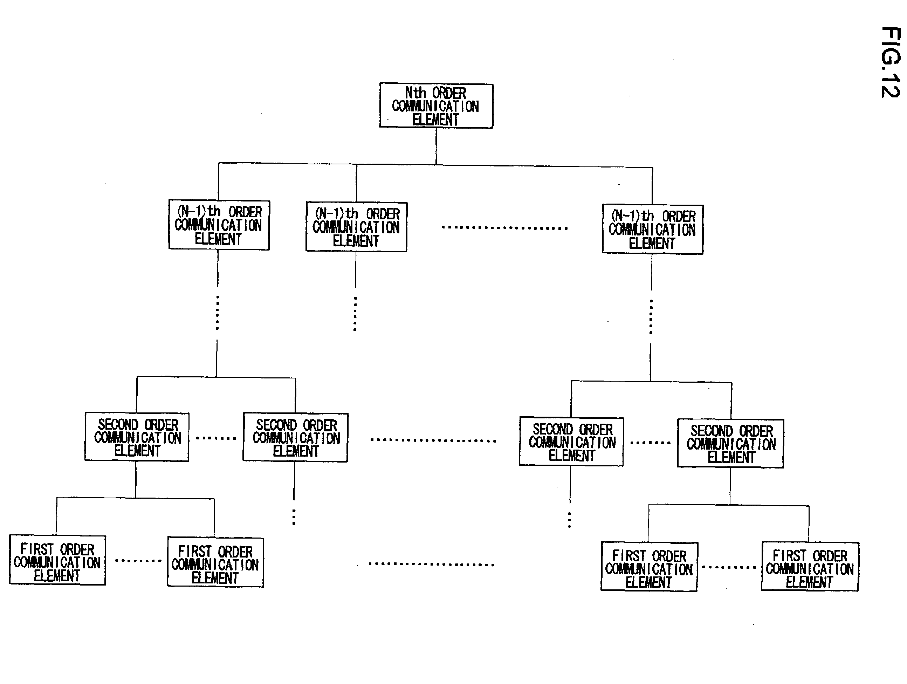

Fig. 12 is an explanatory view illustrating a hierarchical structure of communication elements in an address relay transfer mode. In the address relay transfer mode, multiple communication elements are classified into 1st order to Nth order ranks in the ascending order of their communication management capabilities. If $2 =< M =< N$, the density of the Mth order communication elements being distributed is lower than that of the (M-1)th order communication elements. The Mth order communication elements manage the (M-1)th order communication elements that are placed within a predetermined range therefrom and have at least the functions, required for communication management, which the (M-1)th order communication elements have. Here, what is meant by the management refers to the managing of IDs or the like of other communication elements. For convenience, communication elements which provide management may be called "parent elements," whereas those which are managed may be called "child elements." Upon processing of communications, the Mth order communication element can function not only as the Mth order rank communication element but also as a communication element of the 1st to the (M-1)th order rank. The Mth order communication element serving as a communication element of a given rank manages communication elements lower by one in rank which are placed in a predetermined range set in that given rank. The Mth order communication element may manage the (M-2)th order communication elements that the (M-1)th order communication element manages. However, even when providing no management to the (M-2)th order communication element, the Mth order communication element can grasp the (M-2)th order communication element by making inquiries to the (M-1)th order communication element as appropriate.

In the relay communication apparatus, all the communication elements are provided with such a coverage setting that allows a local communication with other neighboring communication elements. When the communication elements are distributed to be spaced about 10cm from one another, the coverage of the communication elements is also set at about 10cm.

In this case, for the spacing between the communication elements in each rank, it is preferable that the first order communication elements are spaced about 10cm from one another, while the Mth order communication elements are spaced several times farther from one another than the (M-1)th order communication elements. Accordingly, the second order communication elements are spaced about several tens of centimeters from one another. The spacing needs to be grasped not accurately but roughly. The first order communication elements, which are distributed most densely, convey a signal to other neighboring communication elements existing within a certain range, thus functioning as a fundamental element for conveying the signal in this communication apparatus. As described above, even the second or higher order communication elements can serve as the first order communication element while a signal is conveyed along relays. For the transfer of signals in a communication apparatus, the first order communication elements may not have a function of managing other communication elements. For example, in a case that sensors are placed around a first order communication element, the first order communication element may have a function of managing these sensors, as explained later.

First, a description is given to the communication algorithm for a communication apparatus in which one Nth order communication element exists in the highest rank of the hierarchical structure. According to this algorithm, in the presence of a common communication element in a higher rank of the hierarchical structure of a transmitting source communication element and a destination communication element, the higher rank communication element receives a signal from the transmitting source communication element and then creates a route to the destination communication element to transfer the signal. With only one Nth order communication element existing in the highest rank of the hierarchical structure of a communication apparatus, it is obvious that this Nth order communication element can serve at least as the higher rank common communication element, thus allowing the communication algorithm to effectively work.

Suppose that an Mth order communication element is the transmitting source element of a signal, and the destination communication element belongs to a lower rank of the hierarchical structure of the transmitting source communication element. In this case, the transmitting source communication element itself creates a route to the destination communication element for transmission of the signal. On the other hand, when the destination communication element does not belong to a lower rank of the hierarchical structure of the transmitting source communication element, the signal is transmitted to a (M+1)th order communication element which is a parent element of the transmitting source communication element. The parent element checks whether the destination communication element belongs to a lower rank of the hierarchical structure of the parent element. If so, the parent element creates a route to the destination communication element. If not, the parent element further transmits the signal to the (M+2)th order communication elements serving as its parent element. This task is repeated until the signal is conveyed to the Nth order communication element of the highest rank. Then, the Nth order communication element creates a route to the destination communication element. According to this communication algorithm, when transmitting a signal to a child element of another Mth order communication element, an Mth order communication element transmits the signal once to a common parent element or an (M+1)th order communication element, which in turn transfers the signal to another Mth order communication element.

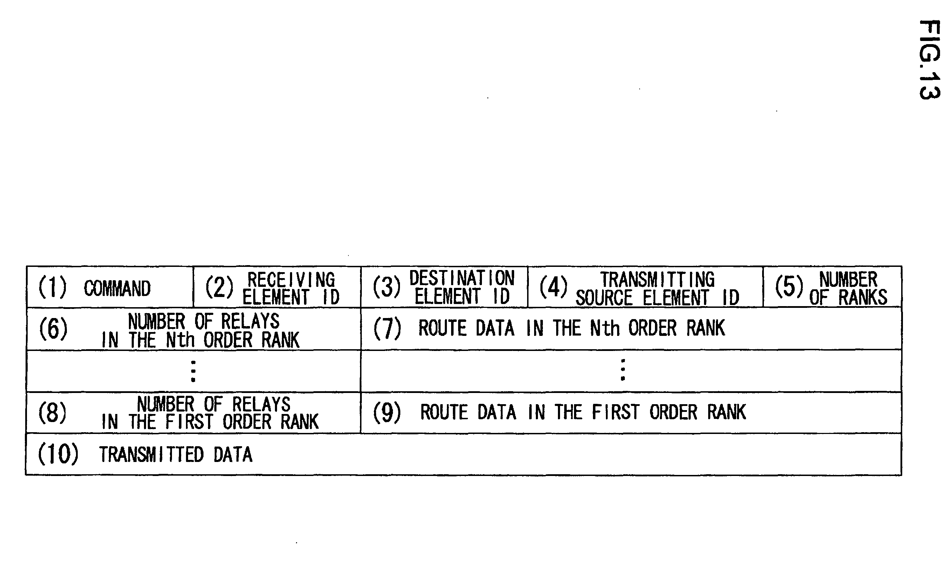

On the other hand, in the presence of a plurality of Nth order communication elements of the highest rank, the transmitting source communication element and the destination communication element may not belong to the rank of one Nth order communication element in some cases. When having checked that the destination communication element does not exist in its rank, the Nth order communication element transmits a check request to another Nth order communication element to search for an Nth order communication element that has the destination communication element in its lower rank. As a result of the search, the Nth order communication element serving as a higher rank element of the transmitting source communication element sets a route to the Nth order communication element serving as a higher rank element of the destination communication element to transmit the signal along the route. This communication algorithm may be utilized not only in the highest Nth order rank but also in a rank of a lower order communication element. That is, according to this communication algorithm, when transmitting a signal to a child element of another Mth order communication element, an Mth order communication element directly searches for the another Mth order communication element without using an (M+1)th order communication element to transmit the signal to the Mth order communication element. To increase the signal transfer efficiency, the Mth order communication element may pre-store the IDs or routes of other Mth order communication elements in a cache or the like which exist within an appropriate range. The Nth order communication element serving as a higher rank element of the transmitting source communication element sets a route to the destination communication element and then creates a transmitted packet shown in Fig. 13 to transmit a signal.

Fig. 13 is a view illustrating an example of the structure of a transmitted packet. This transmitted packet is used to transfer (convey) a signal and includes the following data entries:

(1) Command,
(2) Receiving element ID,
(3) Destination element ID,
(4) Transmitting source element ID,
(5) Number of ranks,
(6) Number of relays in the Nth order rank,
(7) Route data in the Nth order rank,
(8) Number of relays in the first order rank,
(9) Route data in the first order rank, and
(10) Transmitted data.

This transmitted packet may also be called a "transferred packet." Although not listed, this transmitted packet also includes the number of relays and route data in each of the second to the (N-1)th order ranks. Now, the contents of each data entry is described below. As described above, in an environment with a plurality of Nth order communication elements, this transmitted packet is created by an Nth order communication element when an Nth order communication element in a higher rank than that of the transmitting source communication element is different from an Nth order communication element in a higher rank than that of the destination communication element. Even when the transmitting source communication element and the destination communication element belong to the rank of one (N+1)th order communication element, the (N+1)th order communication element creates the transmitted packet shown in Fig. 13.

The command directs how to process the transmitted packet. Since the example shown above is a transferred packet for transferring a signal, the command has a description of codes related to a transfer instruction. The receiving element ID is an ID of the communication element that is subsequently to receive the transmitted packet. The destination element ID is an ID of the communication element at the final destination of the transmitted packet. The transmitting source element ID is an ID of the communication element that transmits data signal. The number of ranks is a number of ranks of the communication elements involved in signal conveyance, "N" being described in this entry.

The number of relays in the Nth order rank is a number of relays of Nth order communication elements existing in the route to the final destination. The route data in the Nth order rank relates to the IDs and sequence of the Nth order communication elements that exist in the route to the final destination. More specifically, the route data in the Nth order rank includes a sequence of IDs of the Nth order communication elements that should be passed through in that order to reach an Nth order communication element that manages a communication element at the final destination. Upon reception of the packet, an Nth order communication element that is passed through deletes its own ID in the route data in the Nth order rank to decrement the number of relays in the Nth order rank by one.

Likewise, assuming that 2 =< M =< N, the route data in the (M-1)th order rank includes a sequence of IDs of the (M-1)th order communication elements that should be passed through in that order to reach a subsequent Mth or higher order communication element, while the number of relays in the (M-1)th order rank is the count of the IDs. More specifically, the number of relays in the first order rank indicates the number of relays of communication elements in the first order rank that exist in the route to a subsequent second or higher order communication element. The route data in the first order rank relates to the IDs and sequence of the first order communication elements that exist in the route to a subsequent second or higher order communication element. In the absence of a subsequent second or higher order communication element, the route data in the first order rank relates to the IDs and sequence of the first order communication elements that exist in the route to the final destination. The transmitted data is to be transmitted.

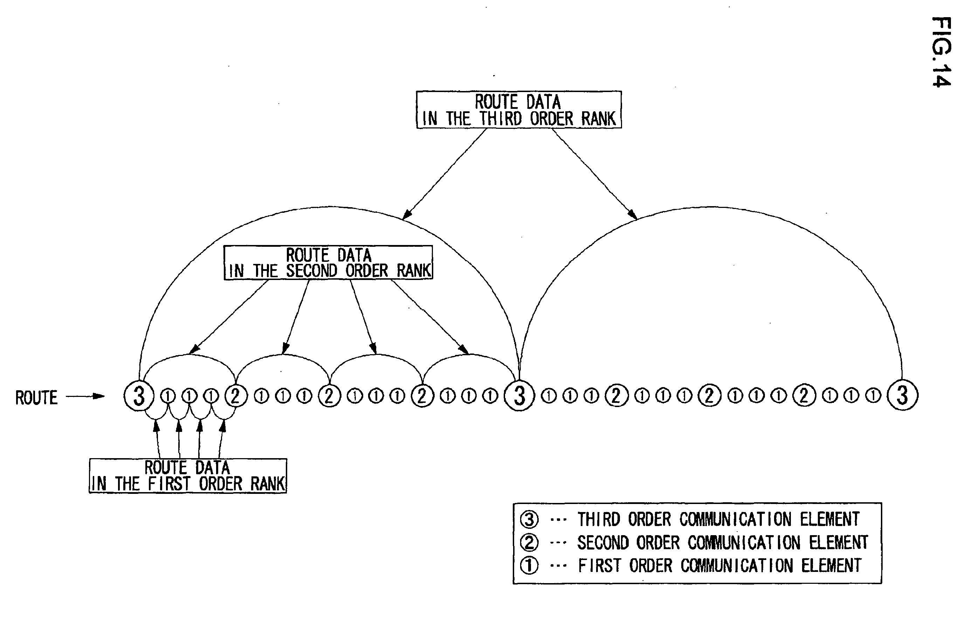

Fig. 14 is a conceptual view illustrating route data in each rank. This example has a setting of three for the number of ranks, assuming that a signal is transmitted from the leftmost third order communication element to the rightmost third order communication element.

In the third order rank, the signal is conveyed from the leftmost third order communication element to the rightmost third order communication element via the central third order communication element. Accordingly, the route data in the third order rank includes the IDs of the central and the rightmost third order communication elements, which are sequenced in that order.

In the second order rank, suppose that a signal is relayed from the leftmost third order communication element to the subsequent third order communication element located at the center. In this case, the signal passes through the three second order communication elements that exist between these third order communication elements. Accordingly, the route data in the second order rank includes the IDs of the three second order communication elements and the ID of the central third order communication element, which are arranged sequentially from the left.

In the first order rank, suppose that a signal is relayed from the leftmost third order communication element to the subsequent second order communication element. In this case, the signal passes through the three first order communication elements that exist between these communication elements. Accordingly, the route data in the first order rank includes the IDs of the three first order communication elements and the ID of the subsequent second order communication element, which are arranged sequentially from the left.

An Mth order communication element stores a route to an (M-1)th order communication element, which it manages, in the memory as a route passing through another (M-1)th order communication element. The Mth order communication element also stores a route to another Mth order communication element, which is placed within a predetermined range from it, in the memory as a route passing through an (M-1)th order communication element. The Mth order communication element can also serve as the communication elements from the second to the (M-1)th order. When serving as a communication element in a given rank, the Mth order communication element manages a communication element lower in rank by one that is located within a predetermined range set in that given rank. For example, when serving as a second order communication element, an Mth order communication element stores a route to all the first order communication elements, which it manages as the second order communication element, in the memory as a route passing through the first order communication elements. More specifically, a route to a given first order communication element is set as a route passing through a plurality of first order communication elements. Referring to Fig. 14, to manage the second order communication elements as a third order communication element, the leftmost third order communication element grasps the route to these second order communication elements and the adjacent third order communication element at the center. To manage the first order communication elements as a second order communication element, the leftmost third order communication element grasps the route to these first order communication elements and the adjacent second order communication element.

Conversely, the (M-1)th order communication element stores at least part of the route to an Mth order communication element, which manages it, in the memory as a route passing through another (M-1)th order communication element. In other words, a child element recognizes a route to a parent element via another child element.

The transmitted data signal packet includes the route data in each rank that is utilized to reach the communication element at the final destination, the route data being updated as appropriate by each communication element involved in the signal conveyance. The Mth order communication element sets the route data in the (M-1)th order rank.

The transmitted packet also includes the receiving element IDs for identifying the communication elements that are subsequently to receive the transmitted packet, each communication element determining based on the receiving element IDs whether the signal is addressed to itself. Upon reception of the transmitted packet in accordance with the receiving element ID, the communication element sets the receiving element ID to the communication element that is subsequently to receive the transmitted packet and then transmits the transmitted packet. The route data includes the ID of the communication element that is subsequently to receive the transmitted packet, the communication element extracting the ID from the route data to set the receiving element ID. In this manner, upon reception of the transmitted packet, each communication element updates the route data to successively transfer the transmitted packet.

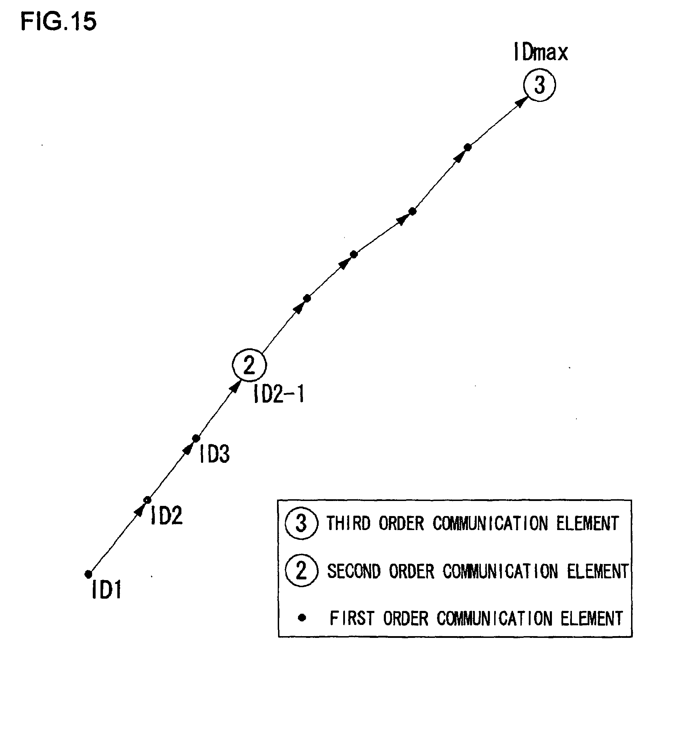

Fig. 15 is an explanatory view illustrating a signal being conveyed from a transmitting source communication element to its parent element in the address relay transfer mode. All the communication elements have an ID for identifying themselves. A method for setting the ID will be described later. Now, assuming that each communication element has an ID, a communication algorithm for signal conveyance is described below in which a signal is conveyed from a transmitting source communication element to its higher rank communication element. In the figure, only the communication elements that are involved in the transmission are illustrated. However, it should be noted that other communication elements are also distributed in an actual communication apparatus. Additionally, for ease of understanding, the description is also given to the case in which the number of ranks is three, i.e., a third order communication element is set at the highest order. The following description is given to a specific example in which a signal is conveyed from a first order communication element ID1 to anther first order communication element.

First, the first order communication element (ID1) transmits a signal to its parent element or a second order communication element (ID2-1). The first order communication element (ID1) stores in the memory at least part of a route leading to its parent element or the second order communication element (ID2-1) via another first order communication element. Here, the route from the first order communication element (ID1) leading to the second order communication element (ID2-1) is determined to lead from the first order communication element (ID1) to the second order communication element (ID2-1) by way of the first order communication element (ID2) and the first order communication element (ID3). On this route, the first order communication element (ID1) may well recognize at least the first order communication element (ID2) to which the signal is directly transmitted. Likewise, the first order communication element (ID2) also recognizes at least part of the route leading to its parent element or the second order communication element (ID2-1). This route is set to lead from the first order communication element (ID2) to the second order communication element (ID2-1) by way of the first order communication element (ID3). On this route, the first order communication element (ID2) may well recognize at least the first order communication element (ID3) to which the signal is directly transmitted. Likewise, the first order communication element (ID3) recognizes that it can convey the signal directly to the second order communication element (ID2-1).

Suppose that the first order communication element (ID1) recognizes only the first order communication element (ID2) on the route leading to the parent element or the second order communication element (ID2-1). In this case, the first order communication element (ID1) conveys the signal to the first order communication element (ID2). The first order communication element (ID2) detects that the signal is to be conveyed to the parent element or the second order communication element (ID2-1) and then conveys the signal to the first order communication element (ID3). Likewise, the first order communication element (ID3) also conveys the signal to the second order communication element (ID2-1). In this manner, when one child element recognizes only the other child element in the same rank, to which a signal is subsequently conveyed, on the transmission route to the parent element, the other child element that has received the signal rewrites the destination of the signal so as to direct the signal to another child element recognized by the other child element to convey the signal thereto.

On the other hand, suppose that the first order communication element (ID1) recognizes the IDs and sequence of all the first order communication elements on the route to the parent element. In this case, the first order communication element (ID1) may create and transmit a signal packet for identifying the IDs and sequence of the first order communication elements on the route. Since the first order communication element (ID1) sets the route to the second order communication element (ID2-1), the processing burden of the first order communication element (ID2) and the first order communication element (ID3) that relay the signal is alleviated, thereby making it possible to realize a high-speed communication.

Upon reception of a signal, the second order communication element (ID2-1) refers to the table stored in the memory to check whether the final destination of the signal or a first order communication element (e.g., ID17) is under the management of ID2-1 itself. The second order communication element has stored in the memory all the IDs of and routes to the first order communication elements that are under its own management. If the destination communication element is under its own management, the second order communication element reads the route from the memory to convey the signal to the final destination.

If the first order communication element (ID17) at the final destination is not under its own management, the second order communication element (ID2-1) transfers the signal to its parent element or a third order communication element (IDmax). The second order communication element (ID2-1) has the route to its own parent element pre-stored in the memory. A route passing through first order communication elements to the parent element is stored as described above. In this manner, the signal is transmitted to the highest third order communication element (IDmax). The third order communication element (IDmax) determines the route to the first order communication element (ID17) to transmit the signal.

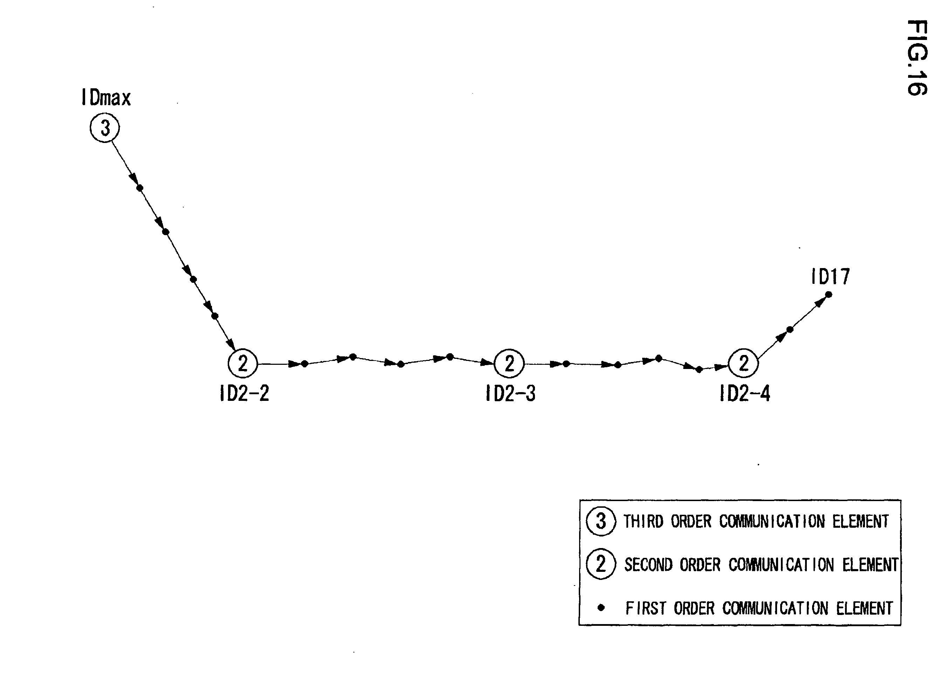

Fig. 16 is an explanatory view illustrating a signal being conveyed from a higher rank communication element to a destination communication element in the address relay transfer mode. Referring to Fig. 15, when the signal is transferred to the third order communication element (IDmax), the third order communication element (IDmax) creates a route passing through second order communication elements that are under its own management. In the example illustrated, set as a route in the second order rank is the route passing sequentially through the second order communication element (ID2-2), the second order communication element (ID2-3), and the second order communication element (ID2-4). Determined as a route in the first order rank is the route passing sequentially through the first order communication elements from the third order communication element (IDmax) to the second order communication element (ID2-2). The third order communication element (IDmax) does not need to grasp the route from the second order communication element (ID2-4) to the first order communication element (ID17) at the final destination. This route may be set later by the second order communication element (ID2-4). Likewise, the third order communication element (IDmax) does not need to grasp the route of the first order communication elements between the second order communication elements. This route may be set later by each of the second order communication elements when the packet arrives. In this communication algorithm, a higher order communication element manages a lower rank communication element to set a route.

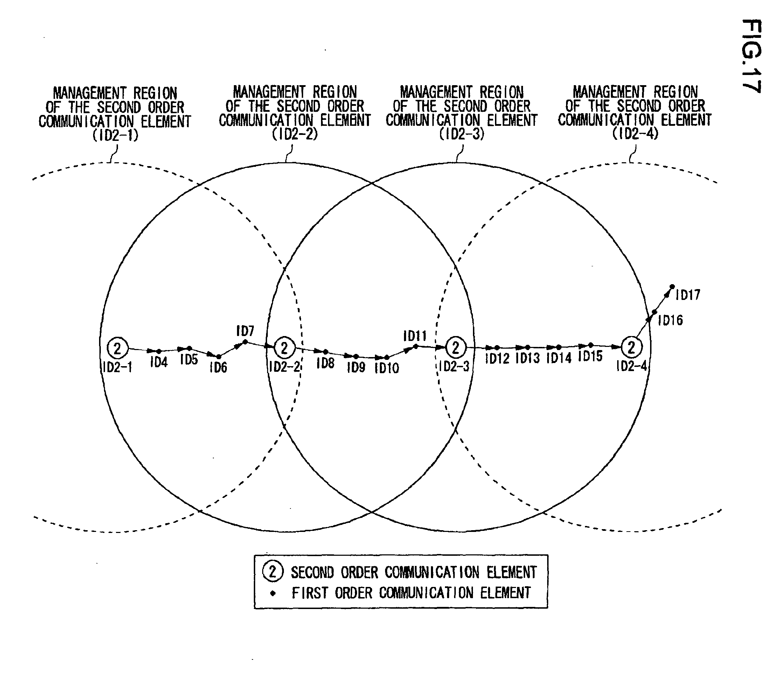

Fig. 17 is an explanatory view illustrating a signal being conveyed to a destination communication element in the address relay transfer mode without passing through a higher order managing communication element. In this example, the signal is conveyed from the second order communication element (ID2-1) to the first order communication element (ID17) via second order communication elements without passing through a third order communication element. For ease of understanding, a description is given to the case in which the number of ranks is two, i.e., a second order communication element is defined as the highest order one. This communication algorithm can be used in conjunction with the communication algorithm described in relation to Fig. 16, in the case of which the third or higher order communication elements are present in the communication apparatus. For convenience in description, IDs of the first and second order communication elements are successively shown; however, IDs may be set randomly in an actual communication apparatus.

The second order communication element (ID2-1) searches for a second order communication element that manages the first order communication element (ID17) at the final destination of the signal. First, the second order communication element (ID2-1) refers to the table stored in the memory to check whether the first order communication element (ID17) is under its own management. The second order communication element has stored in the memory all the IDs of and routes to the first order communication elements that are under its own management. If the destination communication element is under its own management, the second order communication element reads the route from the memory to convey the signal to the final destination.

If the first order communication element (ID17) at the final destination is not under its own management, the second order communication element (ID2-1) transmits a check request to other second order communication elements placed within the management region to check whether they manage the first order communication element (ID17). For simplicity in description, Fig. 17 illustrates only one second order communication element (ID2-2) which is under management of the second order communication element (ID2-1); however, in practice, a plurality of second order communication elements exist within the management region of the second order communication element (ID2-1). Thus, the second order communication element (ID2-1) transmits the check request to all the second order communication elements under its management. Each of the second order communication elements that have received the check request refers to the table stored in the memory to check whether the first order communication element (ID17) is under their management. If the check result shows that it is not under their management, each of the second order communication elements reports the check result to the second order communication element (ID2-1). Upon reception of the check result, the second order communication element (ID2-1) extends the check range. To this end, the second order communication element (ID2-1) instructs the plurality of second order communication elements that are under its management to transmit a check request to second order communication elements that are under their management. In this manner, the check request is conveyed along relays in the rank of the second order communication elements. Finally, the check request is transmitted from the second order communication element (ID2-2) through the second order communication element (ID2-3) to the second order communication element (ID2-4). At this time, the first order communication element (ID17) is proved to be under the management of the second order communication element (ID2-4). Then, the second order communication element (ID2-4) returns the check result to the second order communication element (ID2-1). This allows the second order communication element (ID2-1) to know the approximate location of the first order communication element (ID17), and acquires the route to the second order communication element (ID2-4) as a route passing through second order communication elements. The signal is transferred in the first order rank; however, the second order communication element (ID2-1) does not need to have information on the first order communication elements that are out of its management, and does not need to grasp the route from the second order communication element (ID2-4) to the first order communication element (ID17).

This communication algorithm can be used in conjunction with the communication algorithm described in relation to Fig. 16. For example, in the communication algorithm of Fig. 17, when no second order communication element (ID2-4) exists within a predetermined range from the second order communication element (ID2-1), a packet may be transmitted to the third order communication element (IDmax) to request the third order communication element (IDmax) to create a route.

Then, the second order communication element (ID2-1) sets the data on the route to the second order communication element (ID2-4) in the second order rank and the data on the route to the second order communication element (ID2-2) in the first order rank, to create a transmitted packet. More specifically, the data on the route to the second order communication element (ID2-4) in the second order rank is the data on the route passing sequentially through the second order communication element (ID2-2), the second order communication element (ID2-3), and the second order communication element (ID2-4). The data on the route to the second order communication element (ID2-2) in the first order rank is the data on the route passing sequentially through a first order communication element (ID4), a first order communication element (ID5), a first order communication element (ID6), a first order communication element (ID7), and the second order communication element (ID2-2).

Fig. 18A is a view illustrating the structure of a transferred packet created by the second order communication element (ID2-1). Refer to the description made in relation to Fig. 13 for detailed contents of the data entries. Data entry (1) has a description of code "0001," which indicates a transfer instruction. Data entry (2) has a description of "ID4," which identify the communication element that is subsequently to receive the packet. Data entry (2) is updated each time the communication element receives the packet. Data entry (3) has a description of "ID17," which identifies the final destination of the packet. Data entry (4) has a description of "ID1," which identifies the transmitting source communication element of the signal. Data entry (5) has a description of "2," the value of which identifies the number of ranks.

Data entry (6) has a description of "3," the value of which identifies the number of relays in the second order rank. Data entry (7) has a description of "ID2-2, ID2-3, and ID2-4," which identify the route in the second order rank in conjunction with the sequence of their description. Data entries (6) and (7) are updated each time the second order communication element receives the packet. Data entry (8) has a description of "5," the value of which identifies the number of relays in the first order rank. Data entry (9) has a description of "ID4, ID5, ID6, ID7, and ID2-2," which identify the route to the subsequent second order communication element in the first order rank in conjunction with the sequence of their description. The ID described at the end of the data entry (9) is an ID of a second order or higher communication element unless the element is the first order final destination. Data entries (8) and (9) are updated each time the first order communication element receives the packet.

The transferred packet shown in Fig. 18A is transmitted from the second order communication element (ID2-1) to within the coverage. As a result, based on the description of the receiving element ID (ID4) of the data entry (2), the first order communication element (ID4) receives the transferred packet and then updates the contents of the predetermined data entry, followed by transmitting the transferred packet to the first order communication element (ID5).

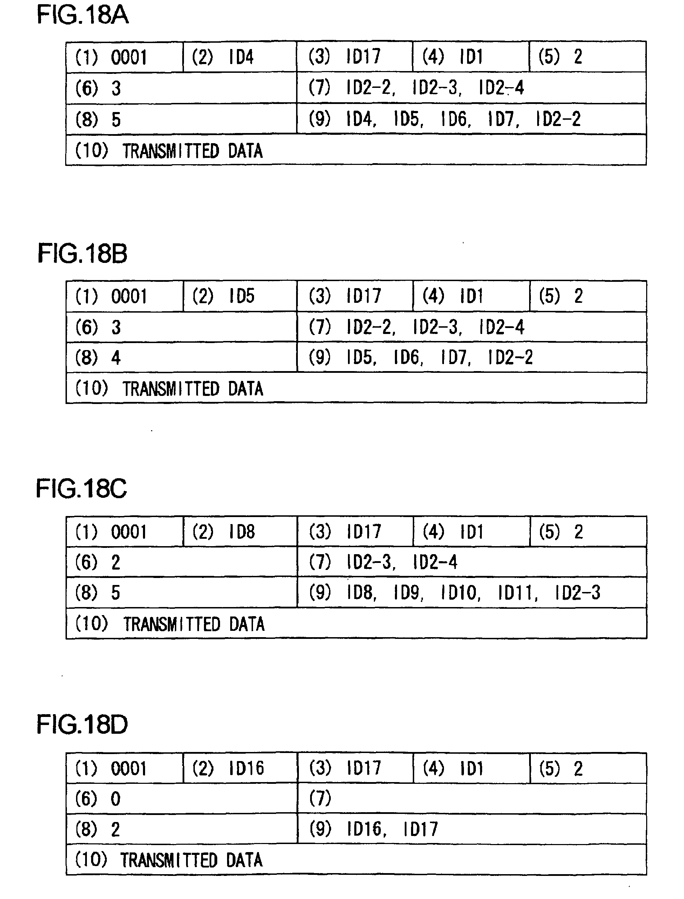

Fig. 18B is a view illustrating the structure of a transferred packet created by the first order communication element (ID4). The first order communication element (ID4) refers to the data entry (9) (see Fig. 18A) to write "IDS," an ID of the communication element that is subsequently to receive the packet, into the data entry (2). At the same time, the first order communication element (ID4) deletes its own ID, described at the head of the data entry (9), from the data entry (9), and decrements by one the number of relays in the first order rank in the data entry (8). The first order communication element (ID4) performs this transfer processing to create and transmit a transferred packet. This transferred packet is relayed through a plurality of first order communication elements to be supplied to the second order communication element (ID2-2) along the route indicated by the route data in the first order rank.

Fig. 18C is a view illustrating the structure of a transferred packet created by the second order communication element (ID2-2). The second order communication element (ID2-2) refers to the data entry (9) to recognize that it is the last element in the route data in the first order rank. This allows the second order communication element (ID2-2) to delete its own ID in the data entry (7) and write the route data in the first order rank indicative of the route to the second order communication element (ID2-3) into the data entry (9). More specifically, the second order communication element (ID2-2) writes "ID8, ID9, ID10, ID11, and ID2-3" to the data entry (9) as the route data in the first order rank, and sets the number of relays in the first order rank to "5" in the data entry (8). Additionally, the second order communication element (ID2-2) sets the number of relays in the second order rank to "2" in the data entry (6). At the same time, the second order communication element (ID2-2) writes "ID8," an ID of the communication element that is subsequently to receive the packet, into the data entry (2). The second order communication element (ID2-2) performs this transfer processing to create and transmit a transferred packet. This transferred packet is supplied to the second order communication element (ID2-3) along the route indicated by the route data in the first order rank. The aforementioned transfer processing is performed repeatedly to supply the transferred packet to the second order communication element (ID2-4).

Fig. 18D is a view illustrating the structure of a transferred packet created by the second order communication element (ID2-4). The second order communication element (ID2-4) refers to the data entry (9) to recognize that it is the last element in the route data in the first order rank along the route from the second order communication element (ID2-3) to the second order communication element (ID2-4). This allows the second order communication element (ID2-4) to delete its own ID from the data entry (7) and sets the number of relays in the second order rank to "0" in the data entry (6). Then, the second order communication element (ID2-4) writes the route data in the first order rank indicative of the route to the first order communication element (ID17) at the final destination into the data entry (9). More specifically, the second order communication element (ID2-4) writes "ID16 and ID17" into the data entry (9) as the route data in the first order rank, and sets the number of relays in the first order rank to "2" in the data entry (8). At the same time, the second order communication element (ID2-4) writes "ID16," an ID of the communication element that is subsequently to receive the packet, into the data entry (2). Thereafter, the second order communication element (ID2-4) transmits the transferred packet. This transferred packet is supplied to the first order communication element (ID17) along the route indicated by the route data in the first order rank.

The aforementioned operations allow the transmitted data to be conveyed to the final destination. As described above, this example provides the communication apparatus having two ranks; however, the number of ranks is not limited thereto. Three or more ranks can also realize the same data transfer function.

The communication algorithm of a communication apparatus in the address relay transfer mode has been described above assuming that each communication element has an ID and a parent element pre-recognizes the routes to all the child elements and a child element pre-recognizes the route to the parent element. Now, an algorithm is described below in accordance with a communication apparatus according to this embodiment, in which an ID is set to each communication element, which spontaneously acquires routes to its own child elements and a route to its parent element.

Turning on the power of the communication apparatus will cause all the communication elements to generate random numbers having a predetermined number of digits, which are in turn stored in the memories as an ID. It is preferable that the number of digits is large enough to reduce the risk of an accidental agreement between the communication elements. Each of the communication elements is classified into each rank using a pre-implemented program. At this point in time, no communication element has any information regarding which communication elements exist in its neighborhood.

First, a second order communication element transmits a "neighborhood response request." Upon reception of the neighborhood response request, a first order communication element returns its own ID to the second order communication element. The ID of the first order communication element is utilized to temporarily identify the first order communication element. As used herein, the term "the second order communication element" refers to a communication element that can realize the function as the second order communication element, being conceptually treated as including the third order or higher communication element. As described above, since the coverage of each communication element is set to such an extent that allows communications with its neighboring communication elements, only the first order communication elements placed in the neighborhood of the second order communication element can receive the "neighborhood response request." The second order communication element stores the first order communication elements that have returned their IDs as "distance 1 communication elements," with new IDs being assigned thereto in the order in which they sent their responses. This assigned ID and the ID of the second order communication element serving as a parent element in the second order rank are combined into an ID in the second order or lower ranks. Thereafter, the neighborhood response request is repeated three times to determine the first order communication elements that have sent their response twice or more as the "distance 1 communication elements." In this manner, IDs are assigned in each rank up to the highest rank, so that all the IDs assigned up to the highest rank are finally combined into an ID, which is the ID of the communication element in the communication apparatus.

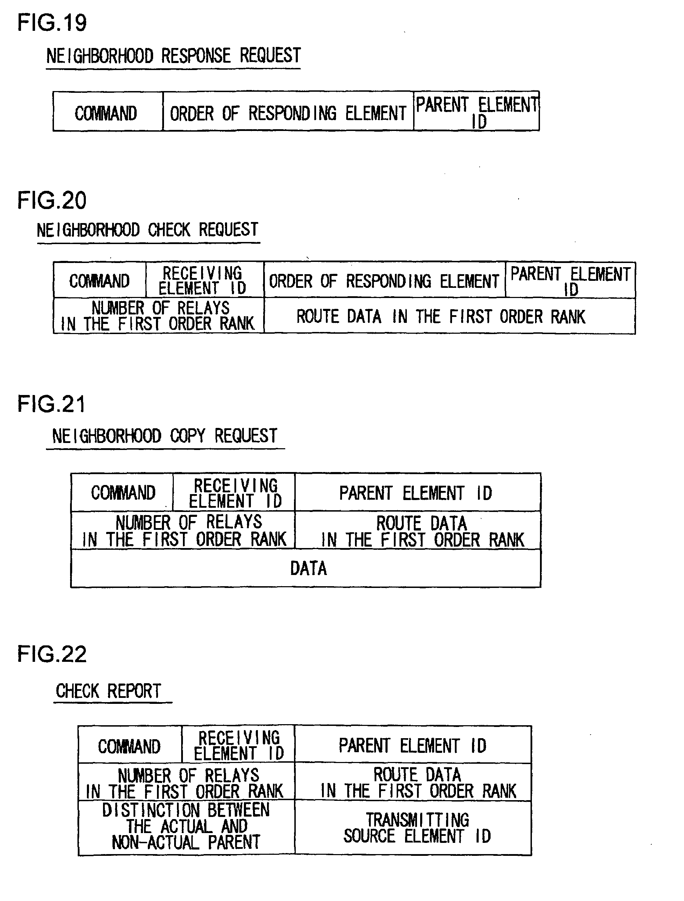

Fig. 19 illustrates the structure of the neighborhood response request packet. This packet includes the data entries: a "command," an "order of the responding element," and a "parent element ID." More specifically, the "command" has a description of a neighborhood response request code, e.g., "0010." The "order of the responding element" has a description of "1" because this packet includes a command provided to a first order communication element. The "parent element ID" has a description of the ID of the second order communication element that has transmitted the neighborhood response request.

Subsequently, the second order communication element transmits the "neighborhood check request" to the "distance 1 communication elements" to which their IDs have been assigned. The first order communication elements that have received the neighborhood check request transmit the neighborhood response request to check for neighboring first order communication elements. Upon reception of the neighborhood response request, the neighboring first order communication elements send their provisional IDs back to the first order communication element that has transmitted the neighborhood response request. The first order communication element that has received the responses from the neighboring first order communication elements transmits these responses to the second order communication element, which in turn receives the responses to define the first order communication elements that have returned their IDs as a "distance 2 communication element," to which a new ID is assigned. Preferably, a first order communication element that the second order communication element has already assigned a new ID does not respond to the neighborhood response request. In this manner, the second order communication element stores in the memory the IDs of and routes to the first order communication elements located within up to distance 2. The second order communication element repeatedly transmits the neighborhood check request to set IDs to and manage an increased number of first order communication elements and successively set routes to the first order communication elements that it manages.

Fig. 20 is a view illustrating the structure of a neighborhood check request packet. This packet includes the following data entries: a "command," a "receiving element ID," an "order of the responding element," a "parent element ID," the "number of relays in the first order rank," and "route data in the first order rank." More specifically, the "command" has a description of a neighborhood check request code, e.g., "0110." The "order of the responding element" has a description of "1" because this packet includes a command provided to a first order communication element. The "parent element ID" has a description of the ID of the second order communication element that has transmitted the neighborhood response request. The "receiving element ID," "number of relays in the first order rank," and "route data in the first order rank" are as described in relation to Fig. 13. Upon reception of the neighborhood check request, the first order communication element that is described at the end of the route data in the first order rank transmits the neighborhood response request to the neighborhood.

At the stage where a new ID has been set to the first order communication elements, the second order communication element conveys the "route from the parent element to the child element" and the "number of relays" in a "neighborhood copy request" to the first order communication elements, serving now as a child element, for storage.

Fig. 21 is a view illustrating the structure of a neighborhood copy request packet. This packet includes the following data entries: a "command," a "receiving element ID," a "parent element ID," the "number of relays in the first order rank," "route data in the first order rank," and "data." The "command" has a description of a neighborhood copy request code, e.g., "1000." The "receiving element ID" has a description of an ID setting, while the "data" has a description of the "route from the parent element to the child element" and the "number of relays." Upon reception of the neighborhood copy request, the first order communication element transmits the information in a "check report" to the second order communication element serving as the parent element.

Fig. 22 is a view illustrating the structure of a check report packet. This packet includes the following data entries: a "command," a "receiving element ID," a "parent element ID," the "number of relays in the first order rank," "route data in the first order rank," a "distinction between actual and non-actual parents," and a "transmitting source element ID." The "command" has a description of a check report code, e.g., "1001." The "parent element ID" has a description of the ID of the second order communication element that has set the ID. The "receiving element ID," "number of relays in the first order rank," and "route data in the first order rank" are as described above. The "transmitting source element ID" has a description of the new ID that has been set by the parent element. The actual and non-actual parents will be described later.

The second order communication element that has received the check report transmits a "relay acknowledgement notice." The first order communication element that has received the relay acknowledgement notice determines the ID of and the route to the second order communication element serving as the parent element, for storage in the memory. Although at an extremely low probability, IDs of a plurality of first order communication elements could be conceivably identical to each other. Accordingly, when having received reports on different routes twice from the first order communication elements having the same ID, the second order communication element serving as the parent element transmits a "relay ID change request" to change the ID of one of the first order communication elements.

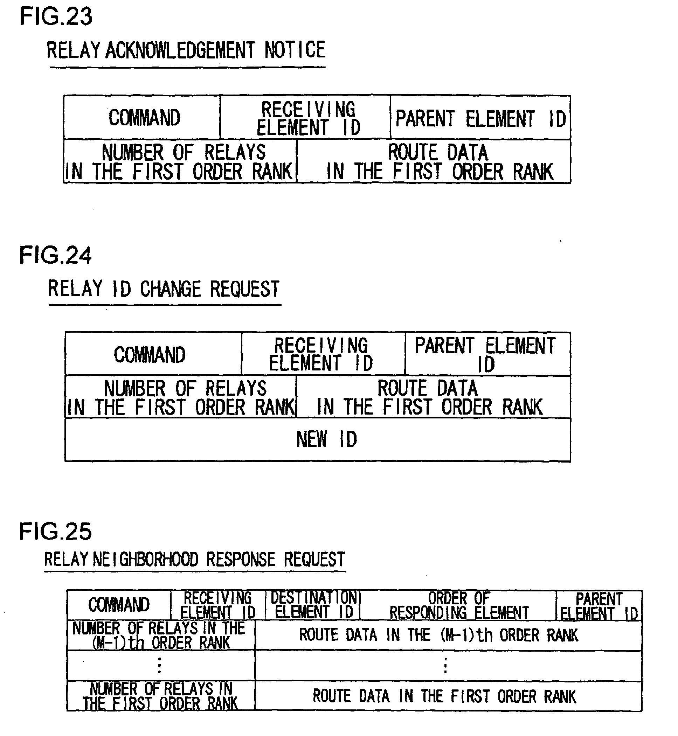

Fig. 23 is a view illustrating the structure of a relay acknowledgement packet. This packet includes the following data entries: a "command," a "receiving element ID," a "parent element ID," the "number of relays in the first order rank," and "route data in the first order rank." The "command" has a description of a relay acknowledgement notice code, e.g., "1010."

Fig. 24 is a view illustrating the structure of a relay ID change request packet. This packet includes the following data entries: a "command," a "receiving element ID," a "parent element ID," the "number of relays in the first order rank," "route data in the first order rank," and a "new ID." The "command" has a description of a relay ID change request code, e.g., "1011." The "new ID" has a setting for avoiding duplicate IDs.

Even after having determined its own parent element, the first order communication element responds to the command from other second order communication elements. A parent element that has been determined for the first time is called an "actual parent." The first order communication element informs the second order communication elements other than the actual parent that the actual parent already exists. As an "actual child," the second order communication element registers the first order communication elements having itself as their actual parent.

Through the aforementioned procedure, the second order communication element forms a hierarchical structure having the first order elements, placed up to distance L, as child elements. The first order elements include other second order communication elements. Eventually, the second order communication element may delete all the child elements, which are not on the routes leading to other second order communication elements, other than the actual child elements.

In this manner, the second order communication element sets the first order communication elements, placed within a predetermined distance, as child elements, and stores the ID of each child element and the route to each child element in the memory. This procedure is performed in all ranks. No neighborhood response request is transmitted between an Mth order (the third or higher order) communication element and an (M-1)th order communication element. This neighborhood response request is a signal intended to be directly received by neighboring communication elements. Since the distance between the Mth order (the third or higher order) communication element and the (M-1)th order communication element is larger than the coverage of the signal, the (M-1)th order communication element cannot directly receive the neighborhood response request transmitted by the Mth order communication element.

The Mth order (the third or higher order) communication element transmits a "relay neighborhood response request" to adjacent (M-1)th order communication elements. When the Mth order communication element has created a table of (M-2)th order elements as an (M-1)th order communication element, the Mth order communication element has already registered these adjacent (M-1)th order communication elements which exist in its neighborhood. The hierarchical structure has the ranks formed sequentially in the ascending order. The (M-1)th order communication element that has received the relay neighborhood response request transmits the relay neighborhood response request to other (M-1)th order communication elements serving as its child elements. A third or higher order communication element, which can serve as a communication element of each of the third order to its own ranks, transmits the relay neighborhood response request as the communication element of each rank to set communication elements lower in rank by one under the management and each of the routes leading to the communication elements.

Fig. 25 is a view illustrating the structure of a relay neighborhood response request packet. This packet includes the following data entries: a "command," a "receiving element ID," a "destination element ID," an "order of the responding element," a "parent element ID," the "number of relays in the (M-1)th order rank," "route data in the (M-1)th order rank," ..., the "number of relays in the first order rank," and "route data in the first order rank."

The aforementioned algorithm for setting IDs and routes is repeated for up to the Nth order communication elements, thereby creating a hierarchical structure of the communication elements and determining the routes to child and parent elements. As described above, the communication apparatus according to this embodiment can automatically define the ID of each communication element and the route leading to each communication element. In particular, when communication elements whose IDs have not been set are randomly placed on an electrically conductive layer, this automatic setting algorithm is very useful. Furthermore, even in the presence of failure in a communication element or a break in the electrically conductive layer, this algorithm for automatically setting IDs and routes makes it possible to change the ID or route as appropriate and thereby recover the communications capability. Thus, it is possible to solve the problem that a break in a conductive wire may make a conventional circuit board inoperable.

For example, using this communication technology, a plurality of circuit elements can be implemented such that the circuit elements that have a communications capability of conveying a signal within the predetermined coverage are distributed on an electrically conductive circuit board. Since no conductive wires are formed, circuit elements can be mounted at any points, thereby making it possible to avoid the conventional problem of a large area being required for conductive wires.

[Second Embodiment]

Now, the present invention will be described below in accordance with the communication apparatus being provided with an additional sensor function according to a second embodiment. Hereinafter, a specific example is shown in which the communication apparatus according to the present invention is provided with an additional tactile sensor and used for an artificial skin or the like. Those skilled in the art should readily understand that any type of sensor other than the tactile sensor, such as a temperature senor or an auditory sensor, may also be attached to the communication apparatus.

As an example, tactile sensors are placed around a first order communication element in the communication apparatus according to the first embodiment. In the communication apparatus, the tactile sensor functions as a zeroth order communication element and may have no functions such as a function for transferring signals. The tactile sensor is adapted to be able to communicate with its neighboring first order communication element serving as its parent element. The tactile sensor has the same coverage as that of each communication element and is able to convey a signal directly to a first order communication element serving as the parent element. Suppose that this communication apparatus is applied to an artificial skin. In this case, tactile sensors are preferably distributed more densely than first order communication elements and made to have a sense of touch as close to the human skin as possible. The ID of the tactile sensor is set in a manner such that a first order communication element transmits the neighborhood response request and then sequentially assign a new ID to the tactile sensors that have responded thereto. With a tactile sensor having a small area, the first order communication element serving as a parent element may be replaced with a host computer. In this case, the communication between the host computer and the tactile sensor corresponds to the direct communication scheme. Now, the tactile sensor that can be used in the second embodiment will be described below.

The second embodiment relates to a tactile sensor which detects the distribution of pressures produced through a contact with a target object, and the resulting sense of touch and movement such as sliding of the object. More particularly, the second embodiment relates to a tactile sensor for a robot hand, an artificial skin for a pet robot or care-giving robot, a sensor for evaluating sensibility such as texture, and the technical field of virtual reality in which a feeling of touch is detected for the human to experience it on a tactile display.

As the tactile sensor, many methods have been suggested for devices such as a film-shaped pressure-sensing sensor array; however, no devices exist yet which can detect information equivalent to the human's feeling of touch. The main reason for this is that a flexible sensor has not yet been realized which can detect a pressure distribution at high densities and can expand and contract.

As an approach to this problem, "Tactile sensor and system for sensing the feeling of touch" was suggested in Japanese Patent Laid-Open Publication No. Hei 11-245190. However, this method lead to a significant loss of energy due to power being supplied to tactile elements through a free space and signal transmission. Additionally, the tactile sensor itself produced noises having an effect on other sensors and communications.

To fabricate the tactile sensor, it is necessary to densely distribute small sensor elements in a wide range to detect deformation in the skin. However, the conductive wires for reading signals from each element were susceptible to damage due to deformation and compromised the flexibility of the tactile sensor itself. It was also difficult to read signals from the small elements at a high signal-to-noise ratio.

In view of the aforementioned problems, it is therefore the object of the second embodiment to provide a tactile sensor which has a deformation-resistant electrically conductive structure to read signals from each element and can read signals from the small elements at a high signal-to-noise ratio.

According to the second embodiment, the conventional problems are addressed using the following tactile element or tactile chip which allows a detected tactile signal to be coded in an internal circuit of the element and then delivered as a serial signal. The tactile chip has electric contacts, one on the front and the other on the back, which are connected to two elastic layers of electrically conductive rubber, respectively. All the tactile chips can be connected only to the common sheets of electrically conductive rubber, such that a required number of tactile chips are sandwiched between the two sheets of electrically conductive rubber to establish electrical contact, thereby providing complete electrical connection to each element. Each tactile chip with their own ID number is designated by a computer connected to the two sheets of electrically conductive rubber to read data therefrom. This configuration allows data to be read from densely distributed tactile elements without providing individual conductive wires to each element. Furthermore, since the stress is coded and transmitted at the very spot where it has been detected, it is possible to perform measurements at a high signal-to-noise ratio.

Now, the second embodiment is described in more detail.

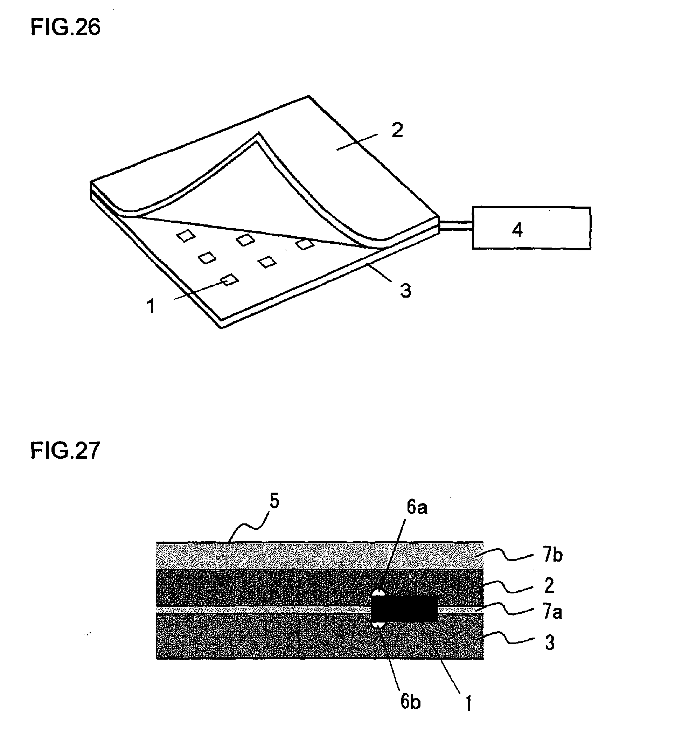

Fig. 26 is a schematic view illustrating a tactile sensor which employs tactile chips 1 and electrically conductive rubber sheets 2, 3 according to the second embodiment. The tactile sensor is constructed such that the tactile chips (hereinafter also referred to as the "tactile elements") 1 are sandwiched between the electrically conductive rubber sheets 2 and 3. The tactile chip 1 converts an externally applied pressure into an electric signal. A host computer 4 serves to apply a voltage to the electrically conductive rubber sheets 2 and 3.

Fig. 27 is a cross-sectional view illustrating the tactile sensor. The tactile chip 1 is provided at its top and bottom with electrodes 6a and 6b, respectively. The electrodes 6a and 6b contact electrically with the electrically conductive rubber sheets 2 and 3, respectively. There is provide an insulating layer 7a between the electrically conductive rubber sheets 2 and 3, with an insulating layer 7b being provided on the top of the electrically conductive rubber sheet 2. The surface 5 of the insulating layer 7b may be exposed outwardly.

Now, the operation of the entire tactile sensor is described below.

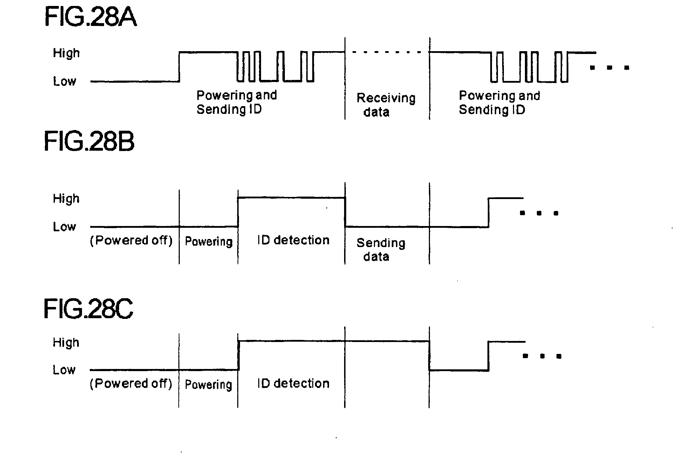

Fig. 28 is a view illustrating the voltage of a signal to be transmitted to each element from the computer of the tactile sensor according to the second embodiment, and the input/output impedance between the terminals of each element.

Fig. 28A illustrates the voltage that is applied to the sheet of electrically conductive rubber by the computer connected to the electrically conductive rubber. Figs. 28B and 28C represent the input and output impedance between the electrodes of each tactile chip. Upon turning power on, the impedance between the two terminals of all the chips is low, such that the voltage applied causes a current to flow into each chip to thereby build up energy for operation. The tactile chips are enabled after a predetermined period of time has elapsed, and the host computer 4 connected to the two electrically conductive rubber sheets 2 and 3 sends an ID signal of 16 bits.

In this example, it is to be understood that the communication circuit of the chip operates at 5MHz, allowing a signal to be exchanged at 1MHz between the computer and the tactile chip. The clock of the computer is not synchronous with that on the tactile chip. Accordingly, the computer sends 32 pulses immediately after power is turned on, and each tactile chip records the number of clocks on its own chip which have been counted until the arrival of the 32 pulses, thereby measuring the frequency ratio between the clock of the signal from the computer and its own clock. This operation is performed only once after the power is turned on, and hereinafter this ratio is used for communications.

When the tactile chip has received an ID signal from the computer and the ID is different from that of the tactile chip itself, the tactile chip waits for a certain period of time until the subsequent ID signal is sent, with the impedance between the terminals remaining at the high level as shown in Fig. 28B. If the received ID is identical to its own ID, the tactile data of 32 bits stored is transmitted as shown in Fig. 28C. The total time required for one chip to receive an ID and send a signal is 60$\mu$sec. Each element measures pressure independently of their communications, updating the data held in the chip every 1msec. This communication scheme corresponds to the direct communication scheme described above.

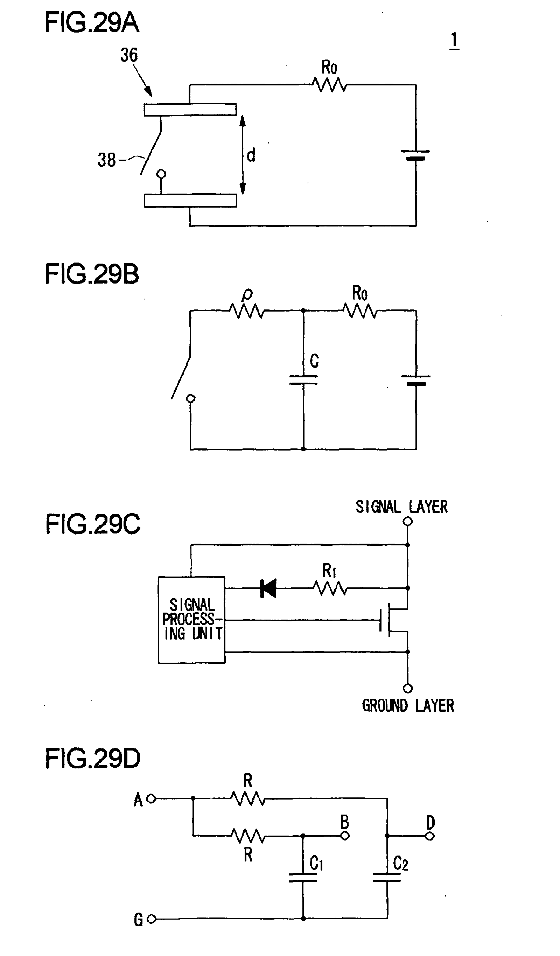

Fig. 29 illustrates the principle of the structure of an artificial skin according to the second embodiment. Fig. 29A is an explanatory view illustrating the principle of signal transmission according to the direct communication scheme. The tactile chip 1 has electric contacts on its top and bottom, the contacts being electrically connected to two communication layers 36. A switch 38 inside the tactile chip 1 is opened or closed, thereby allowing the potential between the communication layers 36 to transmit a signal. Now, let the area of the artificial skin be S and the capacitance between the communication layers 36 be C(F). Then, since $C = \varepsilon_0 S/d$ (where d is the spacing between the communication layers 36), C is approximately equal to 1(nF) at $S = 0.1(m^2)$ and d = 1(mm). Now, let the surface resistance of the communication layers 36 be $\rho$ (which is the resistance across opposite sides of a square cut out of the layer). Then, at a time constant $\tau = \rho C$ or greater, events can be described using the lumped constants as shown in Fig. 29B. Fig. 29B is a view illustrating an equivalent circuit at a frequency that allows the potential across the communication layers 36 to be considered constant. Now, let $\rho = 100(\Omega)$, and then $\tau = 0.1(\mu sec)$. If the artificial skin has an area measuring about 30cm per side, this method makes it possible to transmit a signal at about 1MHz from the tactile chip 1, allowing the signal to be observed at a given point in the communication layers 36.

Fig. 29C is a view illustrating the fundamental circuit configuration of the tactile chip 1. As illustrated, the tactile chip 1 receives a current i (about 30($\mu$W) during operation at 10(MHz)) required to operate the tactile chip 1 via a diode from a signal layer. Assuming that the total number of the elements n is approximately equal to 1,000, the total current consumed by all the elements during standby, ni, is equal to about 30(mA), with the equivalent resistance between the communication layers 36 caused by this current being approximately equal to 100($\Omega$). For example, suppose that the period of time during which the output from each element is high occupies "a" times the entire period. In this case, the total current flowing into all the elements during the high state, J, is equal to ni/a. If an operating voltage can be provided between the two layers even after the voltage drop caused by the current is subtracted therefrom, signals can be exchanged at the same time as power is supplied.

For example, each element can communicate with the host computer as described below. Each element observes an external signal while maintaining the switch in the off position. The potential of the signal layer is high in the absence of signals, and all pieces of data and commands become high at every m bits in principle (e.g., m=4). According to this rule, power is positively supplied to the elements.

A continuation of the low state for m+1 bits or more is a sign for the host computer to transmit a signal immediately after the continuation. Thereafter, when the address data of 16 bits from the first falling edge is identical to the pre-set own ID, the element transmits tactile data. The host computer acquires the data.

Due to a variation in the ratio between the clock frequency F of the signal transmitted from the host computer and the clock frequency G of the element (G > F), the following procedure is executed immediately after power is turned on to observe and store the ratio between F and G.

Fig. 29D is a view illustrating a circuit for detecting power being turned on. This circuit detects power immediately after having been turned on, and starts counting a certain number of input pulses immediately thereafter. Immediately after power is turned on, the host computer applies a communication clock signal to the communication layers 36. While counting a predetermined number of signal clocks, the element counts simultaneously the number of internal clocks of the element to compute the ratio of the cycle of the input pulse and its own clock cycle. Hereinafter, the element reads the signal from the communication layers 36 based on the ratio. When the element itself produces a signal, it generates the signal at the same cycle as the host computer does.

With $C_1 < C_2$, application of a voltage between A and G will cause first the terminal B to become high and then the terminal D to rise. At the same time terminal B rises, the clock of the tactile chip 1 is turned on, allowing the main circuit to operate when both B and D become high. The operation for calculating the clock ratio, which is to be initiated only when B is high and D is low, is performed only once immediately after power is turned on.

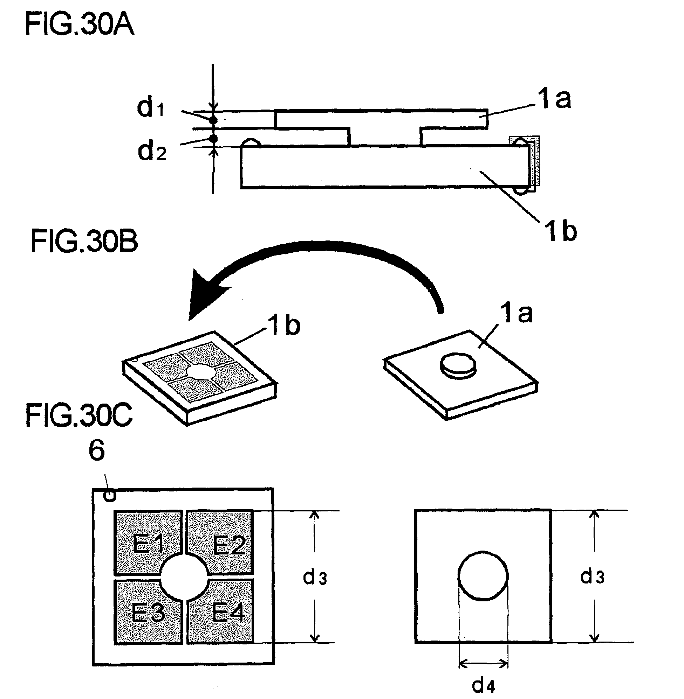

Figs. 30 to 32 illustrate the structure of the tactile sensor chip and the principle of detecting stress. Here, Fig. 30A is a side view illustrating the tactile chip, Fig. 30B being an exploded view illustrating the tactile chip; Fig. 30C being a view showing the surface of an LSI chip and components to be added to the LSI chip. Fig. 30A shows $d_1$ equal to 100$\mu$m and $d_2$ equal to 100$\mu$m, Fig. 30C showing $d_3$ equal to 3mm and $d_4$ equal to 1mm. Fig. 30C shows an electrode 6.

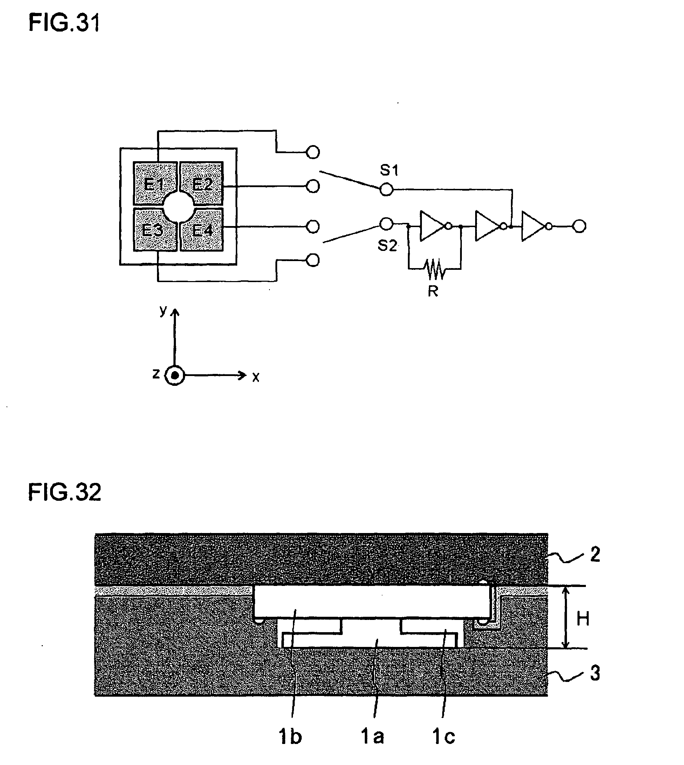

There are formed four electrodes E1 to E4 on the surface of the LSI chip 1b, while inside the LSI chip, a self-excited transmission circuit as shown in Fig. 31 is incorporated in conjunction with a communication digital circuit. The LSI chip 1b is connected at its top with a component 1a of metal (phosphor bronze).

As shown in Fig. 31, terminals S1 and S2 of the transmission circuit are connected via switches within the LSI selectively to two of the electrodes E1 to E4, such that transmission occurs with a time constant RC that is given by a capacitance of C established between the electrodes via the metal component 1a and a resistance of R in the circuit. Since the capacitance C is determined by the distance between an electrode on the LSI and the metal component 1a adhered thereto, the distance between the specified electrode and the metal component 1a can be found by knowing the frequency of the transmission circuit. Therefore, this makes it possible to find the deformation of the metal component 1a resulting from a stress applied to the entire chip. For a large capacitance between the electrodes E1 to E4 and the ground layer of the LSI, an individual transmission circuit can be formed of each electrode Ei and the corresponding are of the metal component 1a to observe the transmitting frequency at each of the four sites.

The aforementioned measurement principle is described again below using equations.

Now, assume that Ci represents the capacitance between the electrode Ei (i= 1 to 4) and the metal component 1a, and the terminals S1 and S2 of the transmission circuit are connected to the electrodes Ei and Ej. The capacitance C coupled to the terminals S1 and S2 is given by

$$1/C = 1/ Ci + 1/Cj.$$

With the capacitance C, the transmission circuit transmits at frequency of $f_{ij} = \alpha/RC$, where $\alpha$ is a constant. Therefore, with Ei and Ej being connected to S1 and S2, the transmitting frequency is given by

$$f_{ij} = \alpha/R \cdot (1/\varepsilon_0 S) \cdot (d_i + d_j),$$

where $d_i$ is an average distance between the electrode Ei and the metal component 1a, $\varepsilon_0$ is the dielectric constant of air, and S is the area of each electrode.

Therefore, based on this transmitting frequency, the average distance between the selected two electrodes and the metal component 1a can be found.

Now, suppose that with the x-y axes defined as shown in Fig. 31, a distribution of vertical stress, p(x, y), is given on the surface of the metal component 1a. In this case, an average pressure P0, and its differential coefficients with respect to x and y, $p_x$ and $p_y$, are related to the transmitting frequency as expressed by the following equations:

$$p0 = -\beta(\Delta f_{12} + \Delta f_{34}),$$

$$p_x \equiv (\partial/\partial x)p = -\gamma(\Delta f_{24} - \Delta f_{13}),$$

and

$$p_y \equiv (\partial/\partial y)p = -\gamma(\Delta f_{12} - \Delta f_{34}),$$

where $\Delta f_{ij}$ is a change in transmitting frequency $f_{ij}$ with respect to the transmitting frequency $f_{ij}$ appearing when no stress is applied. The diameter $d_4$ (see Fig. 30) of the connection between the component 1a and the LSI chip can be reduced, thereby making it possible to increase the sensitivity to the spatial differential coefficients of the pressure distribution, $p_x$ and $p_y$, relative to the sensitivity to p. In a prototype circuit, the resistance R of Fig. 31 is 100kΩ and the transmitting frequency is about 10MHz.

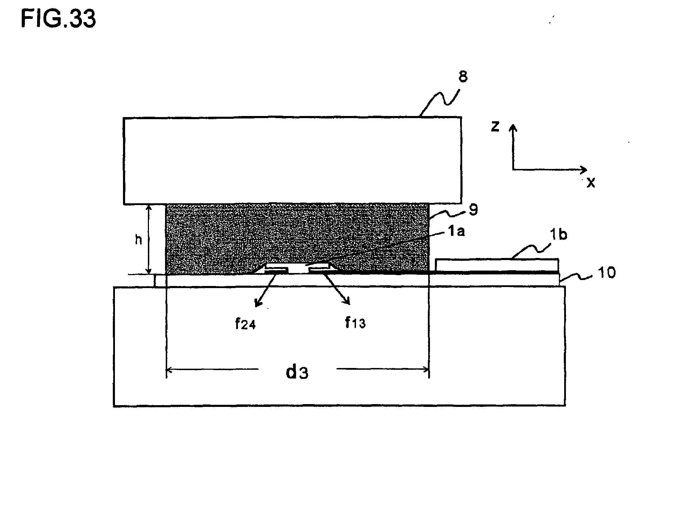

The tactile element is embedded as shown in Fig. 32. Air is present in a cavity 1c. For a finite thickness H of the tactile chip 1, $p_x$ and $p_y$ are proportional to the shearing stresses $T_{xz}$ and $T_{yz}$, which are uniformly given around the element. As a preliminary experiment, a structure having the electrodes E1 to E4 formed on a general-purpose circuit board with the metal component 1a connected thereto was externally attached to a prototype LSI chip 1b to check the operation of the transmission circuit. This is shown in Fig. 33. Fig. 33 shows a rigid wall 8, a flexible rubber block 9, and a circuit board 10. $D_5$ is 10mm.

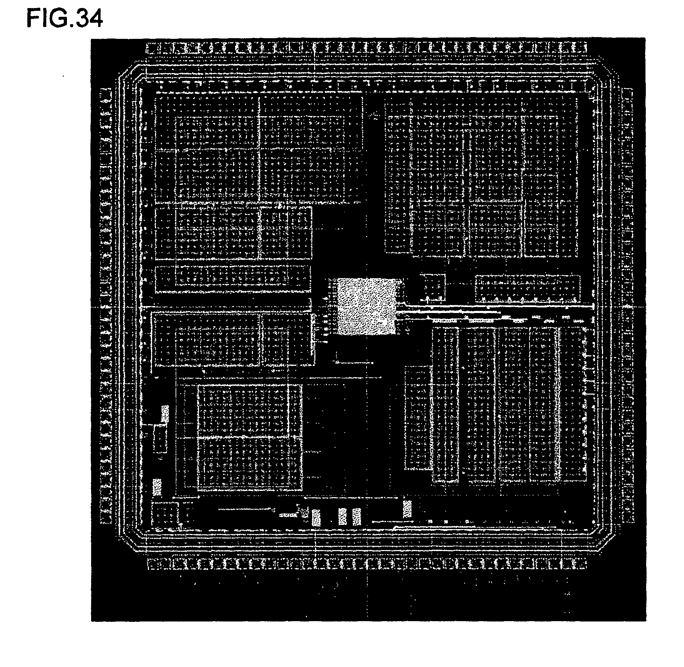

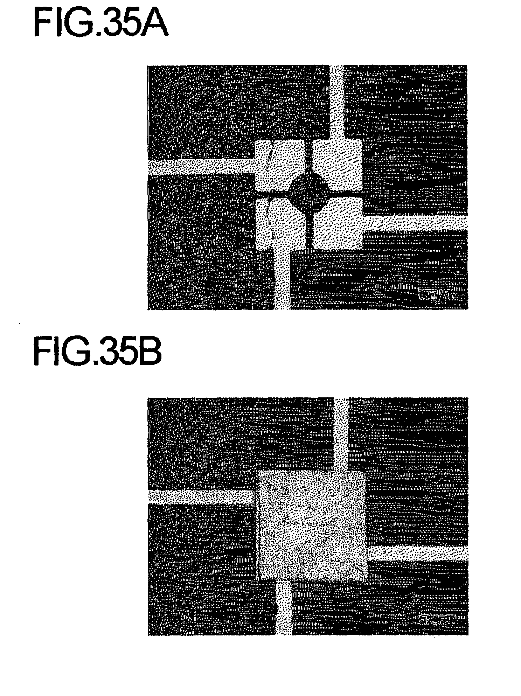

Fig. 34 is a patterned mask for a LSI chip (a substitute view). Fig. 35A shows a picture (a substitute view), taken from above, of the electrodes E1 to E4 which were prepared on the general-purpose circuit board in the preliminary experiment and from which the component 1a was removed. Fig. 35B shows a picture (a substitute view) taken of the electrodes E1 to E4 to which the component 1a has been connected.

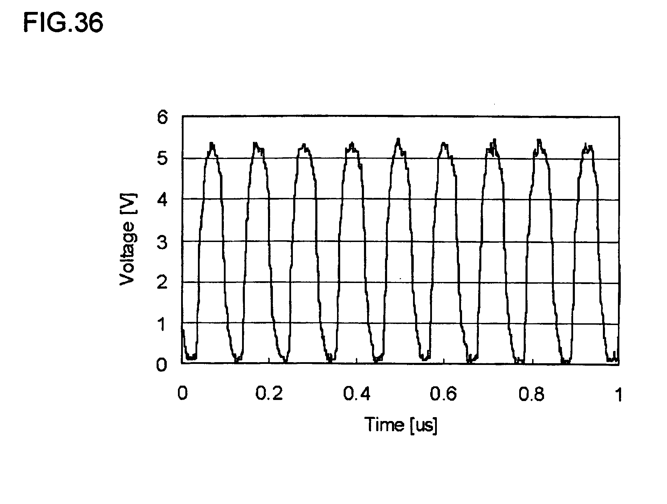

Fig. 36 shows a transmitting waveform observed at no load, the horizontal axis representing time (μs) and the vertical axis representing voltage (V).

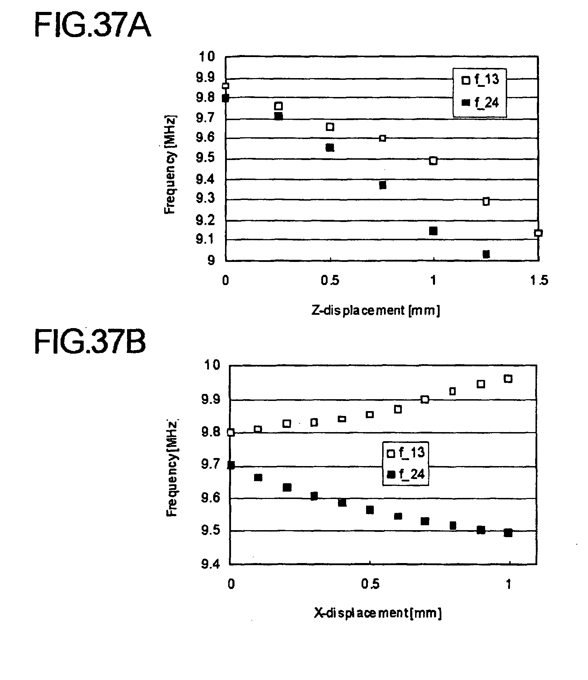

Fig. 37 is a view showing transmitting frequencies observed when the entire surface of a structure with a flexible body placed on the surface thereof is continually displaced.

Fig. 37A is a view showing transmitting frequencies $f_{13}$, $f_{24}$ observed when the entire surface of a structure with a flexible body of a thickness of 3mm (with a Young's modulus of $4.4\times10^5$Pa) placed on the surface thereof is continually displaced vertically. It can be seen that the vertical load causes the distance between the metal component 1a and the electrode to be generally reduced, and both the transmitting frequencies are reduced. In Fig. 37A, the horizontal axis represents the Z displacement (mm) and the vertical axis represents the frequency (MHz).

Fig. 37B shows transmitting frequencies $f_{13}$, $f_{24}$ observed when the surface is continually displaced horizontally (in the x direction). The horizontal axis represents the X displacement (mm) and the vertical axis represents the frequency (MHz). When the stage was moved in the +x direction and the surface was relatively displaced to the left, it was seen that the transmitting frequency $f_{24}$ for the left electrode tended to decrease whereas the transmitting frequency $f_{13}$ for the right electrode tended to increase.

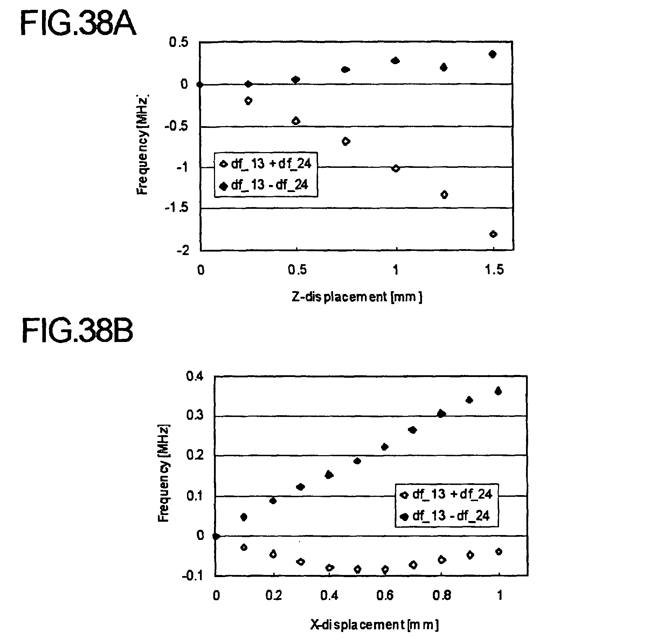

The sum of and difference between the frequencies $f_{13}$ and $f_{24}$ observed in the foregoing were re-plotted in Fig. 38.

Fig. 38A is a plot showing the sum of and the difference between $f_{13}$ and $f_{24}$, observed upon vertical displacement being continually applied, with the horizontal axis representing the displacement in the Z direction. Fig. 38B is a plot showing the sum of and the difference between $f_{13}$ and $f_{24}$, observed upon horizontal displacement (in the x direction) being continually applied to the surface, with the horizontal axis representing the displacement in the X direction. In Fig. 38A, the horizontal axis represents the Z displacement (mm) and the vertical axis represents the frequency (MHz). In Fig. 38B, the horizontal axis represents the X displacement (mm) and the vertical axis represents the frequency (MHz).

With the vertical stress applied, the sum signal changed with no change in the difference signal. Conversely, with the horizontal stress applied, the difference signal changed with no change in the sum signal.

From this result, it can be seen that this tactile chip is capable of separately detecting the vertical and shearing stresses.

On the other hand, as for the stability of the transmitting frequency, observed were a variation of 1kHz during an observation time of 1ms and an error rate of 0.01%. The transmitting frequency varied about 10% for a displacement of 1mm on the surface of the elastic body, with the minimum detectable surface displacement being 1μm. That is, a stress measurement range of 10 bits or more was successfully realized.

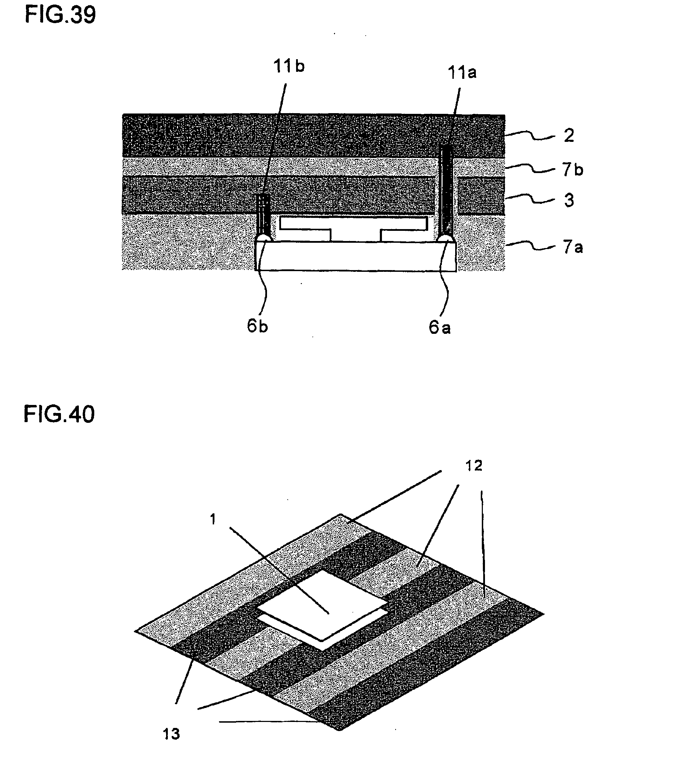

The tactile chip 1 may be connected to the electrically conductive rubber sheets 2 and 3 according to other methods than the one shown above such as a method for placing the electrodes 6a and 6b flush with each other on the chip as shown in Fig. 39, allowing pin-shaped projections 11a and 11b to electrically contact with a plurality of layers, or a method for patterning electrically conductive regions inside a single layer as shown in Fig. 40. In Fig. 40, the electrodes of the chip electrically contact a plurality of electrically conductive regions in a single layer. In Fig. 39, the pin-shaped projections 11a and 11b are formed so as to provide electrical contact between the electrodes 6a and 6b on the chip and the electrically conductive rubber sheets 2 and 3, respectively. The electrically conductive rubber sheet 3 is provided on the top and bottom with the insulating layers 7a and 7b, respectively. Fig. 40 illustrates insulating regions 12 in a single rubber layer and electrically conductive regions 13 in the single rubber layer.

For a sensor sheet having a large area, since the capacitance between the two electrically conductive layers is large, it is effective even in the same layer to replace a portion requiring no electrical conductivity with a nonconductive material.

On the other hand, signals from multiple tactile chips can be read via the electrically conductive rubber sheets without using individual conductive wires, thereby allowing tactile sensors to be densely populated while flexibility and robustness are maintained. Additionally, deformation data locally detected can be coded for transmitting a signal, thereby making it possible to read tactile signals at good signal-to-noise ratio (the experiment employed a measurement range of 10 bits or more). It can be expected that this structure is used to realize a sensor having the same tactile softness as that of a human, and cover the entire surface of a robot.

As described above, the second embodiment can realize a flexible tactile sensor in which multiple tactile elements are densely populated.

In the foregoing, the present invention has been described in accordance with several embodiments. These embodiments are merely illustrative, and those skilled in the art will understand that various modifications can be made to each of the components of the embodiments and the combination of the processes, and are included in the scope of the present invention.

**INDUSTRIAL APPLICABILITY**

As described above, the present invention can be utilized for a novel communication apparatus and for a novel tactile sensor incorporating the assembly.

**Claims**

1. A communication apparatus having a plurality of communication elements that are electrically connected to an electrically conductive layer or an electromagnetic action transfer layer, **characterized in that** each of the communication elements has a communications capability of conveying a signal via the conductive layer or the electromagnetic action transfer layer to other neighboring communication elements.

2. A communication apparatus having a plurality of distributed communication elements, **characterized in that** each of the communication elements has such a coverage that allows local communications with other neighboring communication elements, the local communications allowing sequential transmissions of a signal between the communication elements to convey the signal to a target communication element.

3. The communication apparatus according to claim 1 or 2, wherein
   no individual conductive wires are formed between the communication elements.

4. The communication apparatus according to any one of claims 1 to 3, wherein
   the plurality of communication elements are classified into the first order to the Nth order ranks in ascending order of communication management capabilities of the elements.

5. The communication apparatus according to claim 4, wherein

the communication elements of each rank function as the first order communication element for conveying a signal to other communication elements that exist within a certain neighboring range therefrom, to realize local communications with the neighboring communication elements.

6. The communication apparatus according to claim 4 or 5, wherein
the Mth order communication elements have at least a function of the (M-1)th order communication elements, which is necessary for communications management, and
the Mth order communication elements can be less densely populated than the (M-1)th order communication elements.

7. The communication apparatus according to any one of claims 4 to 6, wherein
the Mth order communication element manages the (M-1)th order communication elements which are populated within a predetermined range therefrom.

8. The communication apparatus according to claim 7, wherein
the Mth order communication element stores a route to an (M-1)th order communication element that it manages, as a route by way of other (M-1)th order communication elements.

9. The communication apparatus according to any one of claims 4 to 8, wherein
the Mth order communication element stores a route to another Mth order communication element that is placed within a predetermined range therefrom, as a route by way of an (M-1)th order communication element.

10. The communication apparatus according to any one of claims 4 to 9, wherein
the Mth order communication element can serve as a communication element of each of the second to the Mth order ranks, and when functioning as a communication element of a given rank, the Mth order communication element manages a communication element, lower in rank by one, which is placed within a range set in the given rank.

11. The communication apparatus according to any one of claims 4 to 10, wherein
the (M-1)th order communication element stores at least part of the route to the Mth order communication element that manages the (M-1)th order communication element, as a route by way of other (M-1)th order communication elements.

12. The communication apparatus according to any one of claims 4 to 11, wherein
the second order communication element transmits a neighborhood response request, and based on a response returned from the first order communication element that has received the neighborhood response request, the second order communication element sets an ID to the first order communication element that has returned the response.

13. The communication apparatus according to claim 12, wherein
the second order communication element transmits a neighborhood check request to the first order communication element to which an ID has been set, and the first order communication element that has received the neighborhood check request transmits a neighborhood response request to check for a neighboring first order communication element, and the second order communication element sets an ID to the first order communication element that has returned a response.

14. The communication apparatus according to claim 13, wherein
the second order communication element repeatedly transmits the neighborhood check request to set IDs to and manage an increased number of first order communication elements and successively set routes to the first order communication elements that it manages.

15. The communication apparatus according to any one of claims 12 to 14, wherein
the third or higher order communication elements serve also as a second order communication element to set an ID to a first order communication element.

16. The communication apparatus according to any one of claims 4 to 15, wherein
the third or higher order communication elements can serve as a communication element of each of the third to its own ranks, and transmits a relay neighborhood response request as a communication element of each rank to set a communication element lower in rank by one which is managed in each rank.

17. The communication apparatus according to claim 16, wherein
the third or higher order communication elements set a route to a communication element that is under their management.

18. The communication apparatus according to any one of claims 4 to 17, wherein
a data signal packet includes route data in each rank which is utilized to reach the communication element at the final destination.

19. The communication apparatus according to claim 18, wherein
the route data in the (M-1)th order rank includes data on a route to an Mth order communication element located halfway on the route from the transmitting source communication element to the communication element at the final destination.

20. The communication apparatus according to claim 18 or 19, wherein
the packet includes a receiving element ID for identifying the communication element that is subsequently to receive the packet.

21. The communication apparatus according to any one of claims 18 to 20, wherein
upon reception of the packet based on the receiving element ID, the communication element sets a receiving element ID of the communication element that is subsequently to receive the packet, and then sends the packet.

22. The communication apparatus according to claim 21, wherein
the communication element sets the receiving element ID in accordance with the route data included in the packet.

23. The communication apparatus according to any one of claims 18 to 22, wherein
upon reception of the packet based on the receiving element ID, each communication element updates the route data and then transmits the packet.

24. The communication apparatus according to any one of claims 4 to 23, wherein
each communication element is assigned an ID, and a higher order communication element refers to an ID included in the packet, thereby determining whether the communication element that is identified by the ID is under its own management.

25. A communication device for transmitting a signal to other communication elements existing within a coverage, the device comprising first and second signal layers isolated from each other, and a communication element connected electrically to these layers, wherein the coverage is determined in accordance with the resistances of the first and second signal layers and the capacitance between the first and second signal layers, allowing the communication element to transmit a signal by discharging electric charges to the first and/or second signal layer.

26. A communication device for transmitting a signal to other communication elements existing within a coverage, the device comprising first and second signal layers, and a communication element connected electrically to these layers, wherein the first signal layer and the second signal layer are brought into conduction in the communication element, thereby allowing a signal to be transmitted.

27. The communication device according to claim 25 or 26, further comprising a high resistance layer which has a resistance higher than those of the first and second signal layers and which brings these layers into conduction.

28. The communication device according to claim 25 or 26, further comprising a high resistance layer which has a resistance higher than that of the first signal layer and which is electrically connected to the first signal layer, and a power supply layer which is electrically connected to the high resistance layer and which supplies power to the communication element.

29. The communication device according to claim 28, wherein
the coverage is determined in accordance with the resistance of the first signal layer.

30. The communication device according to any one of claims 26 to 29, wherein
the communication element transmits a signal by short-circuiting the first and second signal layers.

31. The communication device according to any one of claims 25 to 30, wherein
the second signal layer is a ground layer that is connected to the ground.

32. The communication device according to any one of claims 25 to 31, wherein
the capacitor of the communication element is charged while no signal is being transmitted.

33. The communication device according to any one of claims 25 to 32, wherein
the first and second signal layers are formed of an electrically conductive flexible body or a meshed object.

34. A method for circuit board implementation, comprising distributing a plurality of circuit elements on an electrically conductive circuit board, the circuit elements each of which has a communications capability of conveying a signal within each predetermined coverage, thereby mounting the circuit elements on the board without forming individual conductive wires between the circuit elements.

35. A tactile sensor comprising at least one sensor element including a circuit for measuring stress or temperature to convert it into a coded signal, and an electrically conductive flexible structure which conveys an output signal from the sensor element.

36. The tactile sensor according to claim 35, wherein
a plurality of signal terminals of the sensor element are connected to an electrically continuous, electrically conductive rubber region of the sensor element.

37. The tactile sensor according to claim 35, wherein
the sensor element is provided with two electrodes, which electrically contact two electrically conductive rubber sheets of the elastic structure.

38. The tactile sensor according to claim 35, wherein
electrodes of the sensor element electrically contact two or more electrically conductive rubber sheets of the elastic structure by means of pin-shaped projections protruded from the sensor element.

39. The tactile sensor according to claim 35, wherein
the sensor element is provided on one surface with two or three electrodes, each of which electrically contacts a plurality of electrically conductive rubber regions formed in a single layer of the elastic structure.

40. The tactile sensor according to claim 35, wherein
neighborhood stress is detected in accordance with a variation in capacitance between an LSI chip of the sensor element and an electrode component connected thereto.

41. The tactile sensor according to claim 40, wherein
the electrode component connected to the sensor element is supported at a small area near its center, thereby allowing the electrode to be deformed with a good sensitivity to an uneven pressure on the surface of the electrode.

42. The tactile sensor according to claim 35, wherein
a neighborhood stress is detected in accordance with a variation in resistance of an LSI chip of the sensor element and a pressure-sensitive electrically conductive rubber sheet connected thereto.

43. The tactile sensor according to claim 35, wherein
a neighborhood stress is detected in accordance with a variation in the amount of light arriving at an optical sensor on an LSI chip of the sensor element.

44. A communication device which conveys a signal to other communication elements existing within a coverage, comprising first and second signal layers isolated from each other, and a communication element electro-magnetically connected to these layers, wherein the coverage is determined in accordance with an attenuation factor of an electromagnetic wave, and the communication element emits an electromagnetic wave or a beam of light into the layers including the first signal layer and the second signal layer, thereby transmitting a signal.

FIG.1

```
                              ┌──────────────┐
                              │    RELAY     │
                              │ COMMUNICATION│
                              │    SCHEME    │
                              └──────────────┘
        ┌──────────────┐     /
        │ COMMUNICATION│────<
        │  TECHNOLOGY  │     \
        └──────────────┘      ┌──────────────┐
                              │    DIRECT    │
                              │ COMMUNICATION│
                              │    SCHEME    │
                              └──────────────┘
```

EP 1 443 691 A1

## FIG.2A

RELAY COMMUNICATION SCHEME

## FIG.2B

DIRECT COMMUNICATION SCHEME

FIG.3

100

16

18

200

FIG.4

200

| COMMUNI-<br>CATING<br>UNIT | PROCESSING<br>UNIT | MEMORY |
|:--:|:--:|:--:|
| 50 | 60 | 70 |

## FIG.5

<u>100</u>

## FIG.6A

200

## FIG.6B

200

FIG.7

## FIG.8A

COVERAGE ←——→ COVERAGE  20

200  40  30

## FIG.8B

COVERAGE ←——→ COVERAGE

44
42
20

30

200

## FIG.8C

COVERAGE ←——→ COVERAGE

44
42
20

30
46
48

200

FIG.9

200

36

32

34

FIG.10

100

54

52

FIG.11

FIG.12

FIG.13

EP 1 443 691 A1

| (1) COMMAND | (2) RECEIVING ELEMENT ID | (3) DESTINATION ELEMENT ID | (4) TRANSMITTING SOURCE ELEMENT ID | (5) NUMBER OF RANKS |
|---|---|---|---|---|
| (6) NUMBER OF RELAYS IN THE Nth ORDER RANK | | (7) ROUTE DATA IN THE Nth ORDER RANK | | |
| ⋮ | | ⋮ | | |
| (8) NUMBER OF RELAYS IN THE FIRST ORDER RANK | | (9) ROUTE DATA IN THE FIRST ORDER RANK | | |
| (10) TRANSMITTED DATA | | | | |

FIG.14

EP 1 443 691 A1

ROUTE DATA
IN THE THIRD ORDER RANK

ROUTE DATA
IN THE SECOND ORDER RANK

ROUTE →

ROUTE DATA
IN THE FIRST ORDER RANK

③ ··· THIRD ORDER COMMUNICATION ELEMENT
② ··· SECOND ORDER COMMUNICATION ELEMENT
① ··· FIRST ORDER COMMUNICATION ELEMENT

FIG.15

IDmax
③

②
ID2-1

ID3

ID2

ID1

③ THIRD ORDER COMMUNICATION ELEMENT

② SECOND ORDER COMMUNICATION ELEMENT

• FIRST ORDER COMMUNICATION ELEMENT

FIG.16

FIG.17

MANAGEMENT REGION
OF THE SECOND ORDER
COMMUNICATION ELEMENT
(ID2-1)

MANAGEMENT REGION
OF THE SECOND ORDER
COMMUNICATION ELEMENT
(ID2-2)

MANAGEMENT REGION
OF THE SECOND ORDER
COMMUNICATION ELEMENT
(ID2-3)

MANAGEMENT REGION
OF THE SECOND ORDER
COMMUNICATION ELEMENT
(ID2-4)

② SECOND ORDER COMMUNICATION ELEMENT
• FIRST ORDER COMMUNICATION ELEMENT

EP 1 443 691 A1

## FIG.18A

| (1) 0001 | (2) ID4 | (3) ID17 | (4) ID1 | (5) 2 |
|---|---|---|---|---|
| (6) 3 | | (7) ID2-2, ID2-3, ID2-4 | | |
| (8) 5 | | (9) ID4, ID5, ID6, ID7, ID2-2 | | |
| (10) TRANSMITTED DATA | | | | |

## FIG.18B

| (1) 0001 | (2) ID5 | (3) ID17 | (4) ID1 | (5) 2 |
|---|---|---|---|---|
| (6) 3 | | (7) ID2-2, ID2-3, ID2-4 | | |
| (8) 4 | | (9) ID5, ID6, ID7, ID2-2 | | |
| (10) TRANSMITTED DATA | | | | |

## FIG.18C

| (1) 0001 | (2) ID8 | (3) ID17 | (4) ID1 | (5) 2 |
|---|---|---|---|---|
| (6) 2 | | (7) ID2-3, ID2-4 | | |
| (8) 5 | | (9) ID8, ID9, ID10, ID11, ID2-3 | | |
| (10) TRANSMITTED DATA | | | | |

## FIG.18D

| (1) 0001 | (2) ID16 | (3) ID17 | (4) ID1 | (5) 2 |
|---|---|---|---|---|
| (6) 0 | | (7) | | |
| (8) 2 | | (9) ID16, ID17 | | |
| (10) TRANSMITTED DATA | | | | |

43

## FIG.19

NEIGHBORHOOD RESPONSE REQUEST

| COMMAND | ORDER OF RESPONDING ELEMENT | PARENT ELEMENT ID |
|---|---|---|

## FIG.20

NEIGHBORHOOD CHECK REQUEST

| COMMAND | RECEIVING ELEMENT ID | ORDER OF RESPONDING ELEMENT | PARENT ELEMENT ID |
|---|---|---|---|
| NUMBER OF RELAYS IN THE FIRST ORDER RANK | | ROUTE DATA IN THE FIRST ORDER RANK | |

## FIG.21

NEIGHBORHOOD COPY REQUEST

| COMMAND | RECEIVING ELEMENT ID | PARENT ELEMENT ID |
|---|---|---|
| NUMBER OF RELAYS IN THE FIRST ORDER RANK | | ROUTE DATA IN THE FIRST ORDER RANK |
| DATA | | |

## FIG.22

CHECK REPORT

| COMMAND | RECEIVING ELEMENT ID | PARENT ELEMENT ID |
|---|---|---|
| NUMBER OF RELAYS IN THE FIRST ORDER RANK | | ROUTE DATA IN THE FIRST ORDER RANK |
| DISTINCTION BETWEEN THE ACTUAL AND NON-ACTUAL PARENT | | TRANSMITTING SOURCE ELEMENT ID |

EP 1 443 691 A1

## FIG.23

RELAY ACKNOWLEDGEMENT NOTICE

| COMMAND | RECEIVING ELEMENT ID | PARENT ELEMENT ID |
|---|---|---|
| NUMBER OF RELAYS IN THE FIRST ORDER RANK | ROUTE DATA IN THE FIRST ORDER RANK | |

## FIG.24

RELAY ID CHANGE REQUEST

| COMMAND | RECEIVING ELEMENT ID | PARENT ELEMENT ID |
|---|---|---|
| NUMBER OF RELAYS IN THE FIRST ORDER RANK | ROUTE DATA IN THE FIRST ORDER RANK | |
| NEW ID | | |

## FIG.25

RELAY NEIGHBORHOOD RESPONSE REQUEST

| COMMAND | RECEIVING ELEMENT ID | DESTINATION ELEMENT ID | ORDER OF RESPONDING ELEMENT | PARENT ELEMENT ID |
|---|---|---|---|---|
| NUMBER OF RELAYS IN THE (M-1)th ORDER RANK | ROUTE DATA IN THE (M-1)th ORDER RANK | | | |
| ⋮ | ⋮ | | | |
| NUMBER OF RELAYS IN THE FIRST ORDER RANK | ROUTE DATA IN THE FIRST ORDER RANK | | | |

45

FIG.26

FIG.27

## FIG.28A

High

Low

Powering and
Sending ID

Receiving
data

Powering and
Sending ID

## FIG.28B

High

Low

(Powered off) | Powering | ID detection | Sending
data

## FIG.28C

High

Low

(Powered off) | Powering | ID detection

FIG.29A

$R_0$

36

38

d

1

FIG.29B

$\rho$

$R_0$

C

FIG.29C

SIGNAL LAYER

$R_1$

SIGNAL
PROCESS-
ING UNIT

GROUND LAYER

FIG.29D

A

R

B

D

R

$C_1$

$C_2$

G

FIG.30A

$d_1$
$d_2$
1a
1b

FIG.30B

1b
1a

FIG.30C

6

| E1 | E2 |
| E3 | E4 |

$d_3$

$d_3$

$d_4$

## FIG.31

## FIG.32

FIG.33

FIG.34

# FIG.35A

# FIG.35B

FIG.36

## FIG.37A

## FIG.37B

## FIG.38A

## FIG.38B

FIG.39

FIG.40

## INTERNATIONAL SEARCH REPORT

International application No.

PCT/JP02/10459

### A. CLASSIFICATION OF SUBJECT MATTER
Int.Cl⁷ H04B13/00, H04L12/56, G01L5/00, G08C17/00

According to International Patent Classification (IPC) or to both national classification and IPC

### B. FIELDS SEARCHED
Minimum documentation searched (classification system followed by classification symbols)
Int.Cl⁷ H04B13/00, H04L12/56, G01L5/00, G08C17/00

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2001-268127 A  (Lucent Technologies Inc.),<br>28 September, 2001 (28.09.01),<br>Full text<br>& CA 2328655 A1      & EP 1137224 A1 | 2<br>3,4,6-7<br>1,5,8-34 |
| X<br>Y<br>A | JP 2000-101498 A  (Canon Inc.),<br>07 April, 2000 (07.04.00),<br>Full text<br>(Family: none) | 2<br>3,4,6-7<br>1,5,8-34 |
| Y<br>A | JP 2001-189956 A  (NTT Docomo Inc.),<br>10 July, 2001 (10.07.01),<br>Figs. 1 to 2<br>& CN 1304223 A        & EP 1113691 A1<br>& US 2001/027107 A1 | 3,4,6-7<br>1,5,8-34 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 25 December, 2002 (25.12.02) | 21 January, 2003 (21.01.03) |

| Name and mailing address of the ISA/<br>Japanese Patent Office | Authorized officer |
|---|---|
| Facsimile No. | Telephone No. |

Form PCT/ISA/210 (second sheet) (July 1998)

58

## INTERNATIONAL SEARCH REPORT

| International application No. |
| --- |
| PCT/JP02/10459 |

**C (Continuation). DOCUMENTS CONSIDERED TO BE RELEVANT**

| Category* | Citation of document, with indication, where appropriate, of the relevant passages | Relevant to claim No. |
| --- | --- | --- |
| Y<br>A | JP 9-200269 A (AT & T Corp.),<br>31 July, 1997 (31.07.97),<br>Fig. 1<br>& EP 0782080 A1     & CA 2192258 A<br>& US 5706431 A | 3,4,6-7<br>1,5,8-34 |
| X<br>Y<br>A | JP 2001-265522 A (Keio University),<br>28 September, 2001 (28.09.01),<br>Par. No. [0011]<br>(Family: none) | 35<br>42,43<br>36-41 |
| Y | JP 7-190870 A (Fujitsu Ltd.),<br>28 July, 1995 (28.07.95),<br>Par. No. [0012]<br>(Family: none) | 42 |
| Y | JP 6-58829 A (Yaskawa Electric Corp.),<br>04 March, 1994 (04.03.94),<br>Full text<br>(Family: none) | 43 |
| X | JP 7-27940 A (Nippon Telegraph And Telephone Corp.),<br>31 January, 1995 (31.01.95),<br>Fig. 1<br>(Family: none) | 44 |

Form PCT/ISA/210 (continuation of second sheet) (July 1998)

## INTERNATIONAL SEARCH REPORT

| International application No. |
| --- |
| PCT/JP02/10459 |

**Box I  Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II  Observations where unity of invention is lacking (Continuation of item 3 of first sheet)**

This International Searching Authority found multiple inventions in this international application, as follows:

A communication device for transmitting a signal to other communication elements present within a valid communication distance is not novel since it is disclosed in documents Japanese Patent Publication 2001-268127 and Japanese Patent Publication 2000-101498. Accordingly, the communication device transmitting a signal to other communication elements present within a valid communication distance cannot be a special technical feature.

The special technical feature of claim 1 and claims 3-24 referring to claim 1 is that each communication element transmits a signal to other communication elements via a conductive layer. (Continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**  ☐  The additional search fees were accompanied by the applicant's protest.

☒  No protest accompanied the payment of additional search fees.

Form PCT/ISA/210 (continuation of first sheet (1)) (July 1998)

**INTERNATIONAL SEARCH REPORT**

International application No.

PCT/JP02/10459

Continuation of Box No.II of continuation of first sheet(1)

The special technical feature of claims 3-24 referring to claim 2 is that a signal is successively transmitted between communication elements by local communications until the signal reaches a target communication element.

The special technical feature of claim 25 and claims 27-33 referring to claim 25 is that a valid communication distance is determined according to resistance and capacity of a communication element and a signal is transmitted by the communication element which discharges electric charge to a first signal layer or a second signal layer.

The special technical feature of claim 26 and claims 27-33 referring to claim 26 is that a valid communication distance is determined according to resistance and capacity of a communication element and a signal is transmitted by the communication element which puts a first signal layer or a second signal layer into a conductive state.

The special technical feature of claim 34 is that a plurality of circuit elements having a communication function are arranged on a conductive substrate in a distributed manner, thereby mounting the circuit elements on the substrate.

The special technical feature of claims 35-41 is that a touch sensor consists of a sensor element and a conductive flexible body for transmitting an output signal from the sensor element.

The special technical feature of claim 44 is that a signal is transmitted by a communication element which emits an electromagnetic wave or light to a first signal layer or a second signal layer.

Consequently, there is no special technical feature common to [claim 1 and claims 3-24 referring to claim 1], [claim 2 and claims 3-24 referring to claim 2], [claim 25 and claims 27-33 referring to claim 25], [claim 26 and claims 27-33 referring to claim 26], [claim 34], [claims 35-41], and [claim 44].

Therefore, the claims include seven inventions.

Form PCT/ISA/210 (extra sheet) (July 1998)